# EUROPÄISCHE PATENTSCHRIFT

(11) **EP 2 560 029 B1**
(45) Veröffentlichungstag und Bekanntmachung des Hinweises auf die Patenterteilung: **19.04.2023**
(21) Anmeldenummer: 12171762.3
(22) Anmeldetag: 13.06.2012
(51) Int. Cl.: G01V 3/165

(54) **Vorrichtung und Verfahren zum Detektieren eines Objektes in einem Untergrund**
Method and device for detecting an object in a subsoil
Dispositif et procédé destinés à la détection d'un objet dans un sous-sol

(30) Priorität: 15.07.2011 DE 102011079276
(43) Veröffentlichungstag der Anmeldung: 20.02.2013
(73) Patentinhaber: HILTI Aktiengesellschaft, 9494 Schaan (LI)
(72) Erfinder: Haldner, Patrick, 9494 Schaan (LI); Wuersch, Christoph, 9470 Werdenberg (CH); Kaneider, Wilfried, 6830 Rankweil (AT); Schoenbeck, Dietmar, 6811 Göfis (AT); Korl, Sascha, 9470 Buchs (CH)
(74) Vertreter: Hilti Aktiengesellschaft Corporate Intellectual Property

(56) Entgegenhaltungen:
- US-A1- 2002 130 664
- US-A1- 2011 006 772
- US-B1- 6 541 965

## Beschreibung

### Technisches Gebiet

Die vorliegende Erfindung betrifft eine Vorrichtung zum Detektieren eines Objektes in einem Untergrund mit den Merkmalen gemäß dem Oberbegriff des Anspruchs 1 sowie ein Verfahren zum Detektieren eines Objektes in einem Untergrund mit den Merkmalen gemäß dem Oberbegriff des Anspruchs 18.

Typische Objekte, die in Untergründen detektiert werden, sind Wasserrohre, Armierungseisen, Elektro- und Stromleitungen, Feuchtigkeitsansammlungen und Hohlräume. Unter dem Begriff "Objekt" sind im Rahmen dieser Patentanmeldung beliebige feste, flüssige und gasförmige Objekte, die in Untergründen eingebettet sind, zusammengefasst. Stromleitungen müssen aufgrund der Unfallgefahr beim Durchtrennen einer Stromleitung mit einer hohen Zuverlässigkeit von einer Detektionsvorrichtung erkannt werden. Eine Stromleitung ist eine stromführende Elektroleitung, die im Betrieb ein magnetisches Feld erzeugt, das zum Detektieren der Stromleitung in einem Untergrund genutzt werden kann. Telefon- oder Antennenkabel stellen zwar Elektroleitungen dar, führen aber nur einen sehr geringen Strom und fallen nicht unter die Definition des Begriffes "Stromleitung", wie er im Rahmen dieser Patentanmeldung verwendet wird.

### Stand der Technik

Eine unter dem Produktnamen PS 200 bekannte Vorrichtung zum Detektieren eines Objektes in einem Untergrund weist eine Sendeeinheit mit einem Sendeelement, das zum Aussenden eines Sendesignals in den Untergrund ausgebildet ist, eine Empfangseinheit mit zwei oder mehreren Empfangselementen, die zum Empfangen eines von dem Sendesignal und den Eigenschaften des Objektes und des Untergrundes abhängigen Empfangssignals ausgebildet sind, eine Steuer- und Auswerteeinheit, die zum Steuern der Sende- und Empfangseinheiten und zum Auswerten der Empfangssignale ausgebildet ist, und eine Anzeigeeinheit, die zur Anzeige der von der Steuer- und Auswerteeinheit ausgewerteten Empfangssignale ausgebildet ist, auf. Zum Detektieren eines Objektes im Untergrund sendet das einzige Sendeelement ein Sendesignal aus und die Empfangselemente empfangen jeweils ein Empfangssignal.

Nachteilig an der bekannten Vorrichtung und dem bekannten Verfahren zum Detektieren eines Objektes in einem Untergrund ist, die entlang einer Vorschubrichtung geführte Detektionsvorrichtung nur ein Sendeelement aufweist und die räumliche Auflösung der Detektionsvorrichtung quer zur Vorschubrichtung stark eingeschränkt ist. Außerdem müssen mehrere parallele Messbahnen erfasst werden, um einen Flächenbereich, d.h. eine gewisse Breite quer zur Vorschubrichtung, zu detektieren.

US 2011/006772 A1 offenbart eine Vorrichtung und ein Verfahren zum Detektieren eines Objektes in einem Untergrund. Die Vorrichtung umfasst eine Sendeeinheit mit einem ersten Sendeelement, das zum Aussenden eines ersten Sendesignals in den Untergrund ausgebildet ist, eine Empfangseinheit mit einem ersten und zweiten Empfangselement, die zum Empfangen eines von dem ersten Sendesignal und den Eigenschaften des Objektes und des Untergrundes abhängigen Empfangssignals ausgebildet sind, eine Steuer- und Auswerteeinheit, die zum Steuern der Sende- und Empfangseinheiten und zum Auswerten der Empfangssignale ausgebildet ist, und eine Anzeigeeinheit, die zur Anzeige der von der Steuer- und Auswerteeinheit ausgewerteten Empfangssignale ausgebildet ist. Außerdem umfasst die Sendeeinheit weitere Sendeelemente, die zum Aussenden von weiteren Sendesignalen in den Untergrund ausgebildet sind.

Aus US 2002/130664 A1 und US 6,641,965 B1 sind weitere Vorrichtungen zum Detektieren eines Objektes in einem Untergrund bekannt. Die Vorrichtungen umfassen eine Sendeeinheit mit einem Sendeelement, eine Empfangseinheit mit einem Empfangselement, eine Steuer- und Auswerteeinheit zum Steuern der Sende- und Empfangseinheiten und eine Anzeigeeinheit.

### Darstellung der Erfindung

Die Aufgabe der vorliegenden Erfindung besteht demgegenüber darin, eine Vorrichtung und ein Verfahren zum Detektieren eines Objektes in einem Untergrund dahingehend weiterzuentwickeln, dass die räumliche Auflösung der Detektionsvorrichtung erhöht und die Genauigkeit der Messergebnisse verbessert wird. Außerdem sollen die Messergebnisse sehr zeitnah auf der Anzeigeeinheit der Detektionsvorrichtung angezeigt werden.

Diese Aufgabe wird bei der eingangs genannten Vorrichtung zum Detektieren eines Objektes in einem Untergrund erfindungsgemäß durch die Merkmale des unabhängigen Anspruchs 1 und bei dem eingangs genannten Verfahren zum Detektieren eines Objektes in einem Untergrund erfindungsgemäß durch die Merkmale des unabhängigen Anspruchs 17 gelöst. Vorteilhafte Ausgestaltungen ergeben sich aus den abhängigen Ansprüchen.

Bei der Vorrichtung zum Detektieren eines Objektes in einem Untergrund ist erfindungsgemäß vorgesehen, dass die Steuer- und Auswerteeinheit ausgebildet ist, das erste und zweite Sensorelement der ersten Sensoreinheit so zu steuern, dass im Sendemodus entweder das erste Sensorelement das erste Sendesignal oder das zweite Sensorelement das zweite Sendesignal aussendet und im Empfangsmodus das erste und zweite Sensorelement jeweils ein Empfangssignal empfangen.

Bei der erfindungsgemäßen Vorrichtung sind jeweils ein Sendeelement der Sendeeinheit und ein Empfangselement der Empfangseinheit als ein Sensorelement in die erste Sensoreinheit integriert, wobei die Sensorelemente mittels der Steuer- und Auswerteeinheit zwischen einem Sendemodus, in dem ein Sensorelement ein Sendesignal aussendet, und einem Empfangsmodus, in dem ein Sensorelement ein Empfangssignal empfängt, schaltbar sind. Durch Sensorelemente, die sowohl als Sendeelement als auch als Empfangselement agieren, reduziert sich die Anzahl an Sende- und Empfangselementen und die Detektionsvorrichtung kann entweder kleiner gebaut werden oder die Auflösung der Detektionsvorrichtung kann durch zusätzliche Sensorelemente erhöht werden.

Die Sende- und Empfangselemente sind als Ultraschallsensoren, induktive Sensoren, kapazitive Sensoren, Radarsensoren, Magnetfeldsensoren oder sonstige, zum Detektieren von Objekten in Untergründen geeignete, Sensortypen ausgebildet. Die Radarsensoren sind beispielsweise als Pulsradarsensoren, Stepped-Frequency-Radarsensoren (Stepped Frequency Continuous Wave, Frequency Modulated Continuous Wave, Stepped Chirp), Pseudo-Random-Rausch-Radarsensoren oder Multi-Sinus-Radarsensoren ausgebildet. Als Magnetfeldsensoren eignen sich beispielsweise Spulen, Hall-Sensoren, Magneto-Impedanz-Sensoren, Magneto-Induktive-Sensoren, Fluxgate-Sensoren, Giant Magneto Resistance-Sensoren, Colossal Magneto Resistance-Sensoren und Anisotropie Magneto Resistance-Sensoren.

Die erste Sensoreinheit weist ein drittes Sensorelement mit einem dritten Sendeelement und einem dritten Empfangselement auf, wobei das erste, zweite und dritte Sensorelement in einer verschachtelten Anordnung in einer ersten und zweiten Reihe angeordnet sind, wobei das Sensorelement der zweiten Reihe zwischen den Sensorelementen der ersten Reihe angeordnet ist. Die verschachtelte Anordnung der Sensorelemente hat den Vorteil, dass die räumliche Auflösung der Detektionsvorrichtung gegenüber einer regelmäßigen Anordnung der Sensorelemente in Reihen und Spalten erhöht wird. Die verschachtelte Anordnung eignet sich daher vor allem auch für Detektionsvorrichtungen mit großen Sensorelementen, wie Radarsensoren, deren Dimension durch das verwendete Frequenzband bestimmt ist. Der Abstand zwischen den Sensorelementen innerhalb einer Reihe sowie der Abstand zwischen benachbarten Reihen werden beispielsweise an die verwendeten Sensorelemente und die Messaufgaben angepasst.

Bevorzugt sind das erste, zweite und dritte Sendeelement der Sendeeinheit ausgebildet, Sendesignale mit einer ersten Polarisationsrichtung und Sendesignale mit einer zweiten Polarisationsrichtung auszusenden, wobei die zweite Polarisationsrichtung von der ersten Polarisationsrichtung verschieden ist. Besonders bevorzugt sind das erste, zweite und dritte Empfangselement der Empfangseinheit ausgebildet, gleichzeitig ein erstes Empfangssignal in der ersten Polarisationsrichtung und ein zweites Empfangssignal in der zweiten Polarisationsrichtung zu empfangen. Durch die Messung mit zwei verschiedenen Polarisationsrichtungen, beispielsweise parallel und senkrecht zu einer linearen Vorschubrichtung, kann zwischen verschiedenen Materialien unterschieden und die Ausrichtung der Objekte bestimmt werden. Die Materialien Eisen und Kunststoff weisen unterschiedliche und komplementäre Reflektionsamplituden (Radarquerschnitte) für verschiedenen Polarisationsrichtungen auf, so dass durch die Verwendung unterschiedlicher Polarisationsrichtungen zwischen Kunststoff und Eisen, also beispielsweise zwischen Kunststoffrohren und Armierungseisen, unterschieden werden kann. Es ist theoretisch möglich, anhand der Reflektionsamplituden zweier unterschiedlicher Polarisationsrichtungen auf den Durchmesser eines Armierungseisens zu schließen.

Bevorzugt weist die Steuer- und Auswerteeinheit eine Speichereinheit mit einem Hauptspeicher und einem digitalen Stapelspeicher (Zwischenspeicher) auf. im digitalen Stapelspeicher werden die Empfangssignale digital gemittelt, bevor sie an den Hauptspeicher weitergeleitet werden. Dadurch, dass die Mittelung lokal (z.B. in einem FPGA) durchgeführt wird, kann die Kommunikationsbandbreite zum Hauptspeicher der Steuer- und Auswerteeinheit minimiert werden. Die Vorteile eines digitalen Stapelspeichers liegen darin, dass die Mittelungsanzahl über die Anwendung definiert werden kann. Ist beispielsweise die Vorschubgeschwindigkeit bei gleichbleibender örtlicher Abtastfrequenz sehr hoch, kann die Mittelungszahl dynamisch reduziert werden. Dadurch nimmt man zwar höheres Rauschen in Kauf, aber die Anwendung kann trotzdem erfüllt werden. Andererseits kann dadurch in schwierigen Messsituationen (äußere Störungen, geringe Signale) durch eine langsame Vorschubbewegung ein maximales Signal-Rausch-Verhältnis aus den Empfangssignalen erzielt werden.

In einer bevorzugten Ausführungsform ist eine zweite Sensoreinheit mit Sensorelementen vorgesehen, wobei sich die Sensorelemente der zweiten Sensoreinheit in mindestens einer Sensoreigenschaft von den Sensorelementen der ersten Sensoreinheit unterscheiden. Durch die Verwendung mehrerer Sensoreinheiten mit unterschiedlichen Sensoreigenschaften können die räumliche Auflösung der Detektionsvorrichtung und die Genauigkeit der Messung erhöht werden. Unter dem Begriff "Sensoreigenschaft" sind alle Eigenschaften von Sensoreinheiten, wie Größe, Position, Orientierung, Sensortyp zusammengefasst. Zu den Sensoreigenschaften gehören bei Radarsensoren weitere Sensoreigenschaften, wie Polarisation (linear, zirkular, parallel, senkrecht), Bandbreite, Frequenzband, Modulationsart, und bei induktiven Sensoren weitere Sensoreigenschaften, wie Amplitude, Frequenzbereich, Erregungsmuster, Empfindlichkeit, Bandbreite. Durch die Verwendung von unterschiedlichen Sensortypen oder die Verwendung eines Sensortyps mit unterschiedlichen Sensoreigenschaften können verschiedene Objekte zuverlässig detektiert werden. Beispielsweise detektieren induktive Sensoren in Form von Spulen bei einem kleinen Spulendurchmesser zuverlässig oberflächennahe und eng aneinander liegende Objekte (geringe Separation), wohingegen Spulen mit einem großen Spulendurchmesser zuverlässig oberflächenferne Objekte detektieren. Durch die Kombination von kleinen und großen Spulen in einer induktiven Sensoreinheit werden sowohl oberflächennahe als auch oberflächenferne Objekte zuverlässig detektiert. In Abhängigkeit vom Einsatzgebiet der Detektionsvorrichtung können alle bekannten Sensorelemente miteinander kombiniert werden.

Bevorzugt sind in einem ersten Anzeigemodus die Messergebnisse der ersten Sensoreinheit, in einem zweiten Anzeigemodus die Messergebnisse der zweiten Sensoreinheit und in einem dritten Anzeigemodus die Messergebnisse der ersten und zweiten Sensoreinheit auf der Anzeigeeinheit darstellbar. Bei Detektionsvorrichtungen, die zwei verschiedene Sensoreinheiten aufweisen, berechnet die Steuer- und Auswerteeinheit gemeinsame Tiefenschnittbilder und/oder getrennte Tiefenschnittbilder. Aus den gemeinsamen Tiefenschnittbildem kann eine gemeinsame Draufsicht berechnet und auf der Anzeigeeinheit dargestellt werden. Gemeinsame Tiefenschnittbilder und eine gemeinsame Draufsicht haben den Vorteil, dass alle Objekte in einer Darstellung angezeigt werden. Getrennte Tiefenschnittbilder und daraus berechnete getrennte Draufsichten können gleichzeitig oder nacheinander auf der Anzeigeeinheit angezeigt werden.

Die zweite Sensoreinheit ist bevorzugt als Stromsensoreinheit zum Detektieren einer Stromleitung ausgebildet. Stromleitungen müssen aufgrund der Unfallgefahr beim Durchtrennen einer Stromleitung mit hoher Zuverlässigkeit von einer Detektionsvorrichtung erkannt werden. Durch die zweite Sensoreinheit, die ausschließlich zum Detektieren von Stromleitungen vorgesehen ist, wird die Zuverlässigkeit, mit der eine Stromleitung detektiert wird, erhöht.

In einer bevorzugten Ausführungsform weist die zweite Sensoreinheit erste und zweite Magnetfeldsensorelemente auf, wobei die ersten Magnetfeldsensorelemente ein Magnetfeld oder einen Magnetfeldgradienten in einer ersten Richtung und die zweiten Magnetfeldsensorelemente ein Magnetfeld oder einen Magnetfeldgradienten in einer von der ersten Richtung verschiedenen, zweiten Richtung erfassen. Dabei ist die zweite Richtung besonders bevorzugt senkrecht zur ersten Richtung angeordnet.

Besonders bevorzugt weist die zweite Sensoreinheit dritte Magnetfeldsensorelemente auf, die ein Magnetfeld oder einen Magnetfeldgradienten in einer von der ersten und zweiten Richtung verschiedenen dritten Richtung erfassen. Dabei ist die dritte Richtung besonders bevorzugt senkrecht zur ersten und zweiten Richtung angeordnet. Dadurch, dass das Magnetfeld oder der Magnetfeldgradient der Stromleitung in einer dritten Richtung erfasst wird, erhöhen sich die Zuverlässigkeit der Messung und die Genauigkeit der räumlichen Zuordnung der Stromleitung im Untergrund vor allem bei geneigten, krummen und/oder verdrillten Stromleitungen und bei Mehrphasenstromleitungen.

In einer alternativen bevorzugten Ausführungsform weist die zweite Sensoreinheit Magnetfeldsensorelemente auf, die ein Magnetfeld oder einen Magnetfeldgradienten in einer ersten Richtung und in einer von der ersten Richtung verschiedenen, zweiten Richtung erfassen. Dabei ist die zweite Richtung besonders bevorzugt senkrecht zur ersten Richtung angeordnet.

Besonders bevorzugt erfassen die Magnetfeldsensorelemente ein Magnetfeld oder einen Magnetfeldgradienten in einer von der ersten und zweiten Richtung verschiedenen dritten Richtung, wobei die dritte Richtung besonders bevorzugt senkrecht zur ersten und zweiten Richtung angeordnet ist. Dadurch, dass das Magnetfeld oder der Magnetfeldgradient der Stromleitung auch in der dritten Richtung erfasst wird, erhöht sich die Genauigkeit der räumlichen Zuordnung der Stromleitung im Untergrund vor allem bei geneigten, krummen und/oder verdrillten Stromleitungen und bei Mehrphasenstromleitungen.

Die zweite Sensoreinheit weist besonders bevorzugt eine Modulationseinheit auf, die mit der Steuer- und Auswerteeinheit über eine Kommunikationsverbindung verbindbar ist und die auf einen Steuerbefehl der Steuer- und Auswerteeinheit ein Stromsignal der Stromleitung moduliert. Durch die Modulation des Stromsignals mit einem bekannten Muster lassen sich die Empfangssignale der Stromleitung besser von den Magnetfeldsensorelementen identifizieren. Die Modulationseinheit ist beispielsweise so ausgebildet, dass sie in eine Steckdose, die im Untergrund vorhanden ist, eingesteckt wird und an eine Phase der Stromleitung koppelt. Besonders bevorzugt weist die Steuer- und Auswerteeinheit ein Auswertemodul zum Demodulieren der Empfangssignale auf.

In einer bevorzugten Ausführungsform ist die Steuer- und Auswerteeinheit ausgebildet, aus den Empfangssignalen der Empfangselemente der Empfangseinheit mehrere Tiefenschnittbilder zu berechnen. Besonders bevorzugt ist die Steuer- und Auswerteeinheit ausgebildet, aus den Tiefenschnittbildern eine Draufsicht als Mittelwert, Median, Maximalwert oder gewichtete Summe über einen Tiefenbereich zwischen einer ersten Tiefe und einer zweiten Tiefe zu berechnen und auf der Anzeigeeinheit darzustellen, wobei die erste Tiefe und die zweite Tiefe besonders bevorzugt verstellbar ausgebildet sind. Neben den genannten mathematischen Funktionen, Mittelwert, Median, Maximalwert und gewichtete Summe, kann jede geeignete mathematische Funktion dazu verwendet werden, die Draufsicht zu berechnen. Aus der Draufsicht erhält der Bediener eine direkte räumliche Zuordnung der Objekte zum Untergrund. Durch die Verstellbarkeit der ersten und zweiten Tiefe können Objekte, die in verschiedenen Tiefen in den Untergrund eingebettet sind, getrennt voneinander in der Draufsicht dargestellt werden. Der Bediener kann die in der Draufsicht dargestellten Objekte auf verschiedene Tiefenbereiche beschränken.

Handgeführte Detektionsvorrichtungen, die eine lineare Vorschubbewegung ausführen, haben gegenüber handgeführten Detektionsvorrichtungen, die eine beliebige Vorschubbewegung ausführen, den Vorteil, dass die Ortsauflösung in der Vorschubrichtung durch die Vorschubbewegung erhöht wird und eine geringere Anzahl an Sende- und Empfangselementen erforderlich ist. Die Breite der Sensoreinheit in Vorschubrichtung spielt keine Rolle, da die Sensoreinheit kontinuierlich, d.h. mit einer sehr hohen örtlichen Auflösung in der Vorschubrichtung über den Untergrund bewegt wird. Da bei einer beliebigen Vorschubbewegung keine Richtung bevorzugt ist, sollte die Anzahl an Sende- und Empfangselementen in beiden Richtungen ungefähr gleich sein, um eine vergleichbare Ortsauflösung zu erzielen. Eine beliebige Vorschubbewegung hat gegenüber einer linearen Vorschubbewegung den Vorteil, dass der Bediener selbst bestimmen kann, in welchen Bereichen gemessen wird. Es ist dadurch möglich, beliebige Oberflächenkonturen zu erfassen, was bei unzugänglichen Situationen ein wesentlicher Vorteil ist. Bei einer linearen Vorschubbewegung werden entweder Strecken oder vordefinierte Raster abgefahren. Um diese Raster abfahren zu können, werden Vorlagen verwendet, welche auf dem Untergrund befestigt werden.

Das Verfahren zum Detektieren eines Objektes in einem Untergrund ist erfindungsgemäß gekennzeichnet durch die weiteren Schritte: Aussenden eines zweiten Sendesignals durch ein zweites Sendeelement der Sendeeinheit in den Untergrund und Empfangen eines von dem zweiten Sendesignal und den Eigenschaften des Objektes und des Untergrundes abhängigen Empfangssignals durch das erste und zweite Empfangselement der Empfangseinheit.

Bevorzugt umfasst die Sendeeinheit ein drittes Sendeelement und die Empfangseinheit ein drittes Empfangselement, wobei von jedem Sendeelement der Sendeeinheit nacheinander ein Sendesignal ausgesandt wird und von allen Empfangselementen der Empfangseinheit zu jedem Sendesignal gleichzeitig ein Empfangssignal empfangen wird. Dadurch, dass alle monostatischen und bistatischen Empfangssignale erfasst werden, wird die räumliche Auflösung der Messung erhöht.

Bevorzugt wird von den ersten, zweiten und dritten Sendeelementen der Sendeeinheit jeweils in einem ersten Schritt ein Sendesignal mit einer ersten Polarisationsrichtung und in einem zweiten Schritt ein Sendesignal mit einer zweiten Polarisationsrichtung, die von der ersten Polarisationsrichtung verschieden ist, ausgesandt. Dabei wird besonders bevorzugt von den Empfangselementen der Empfangseinheit gleichzeitig ein erstes Empfangssignal in der ersten Polarisationsrichtung und ein zweites Empfangssignal in der zweiten Polarisationsrichtung empfangen. Durch die Messung mit zwei verschiedenen Polarisationsrichtungen, beispielsweise parallel und senkrecht zu einer linearen Vorschubrichtung, kann zwischen verschiedenen Materialien unterschieden und die Ausrichtung der Objekte bestimmt werden.

In einer bevorzugten Verfahrensvariante ist vorgesehen, dass die Empfangssignale in einem Stapelspeicher digital gemittelt werden, bevor sie an einen Hauptspeicher übermittelt werden. Dadurch kann die Kommunikationsbandbreite zum Hauptspeicher der Steuer- und Auswerteeinheit minimiert werden, indem die Mittelung lokal (z.B. in einem ausgelagerten FPGA) durchgeführt wird. Die Vorteile eines digitalen Zwischenspeichers liegen darin, dass die Mittelungsanzahl über die Anwendung definiert werden kann, z.B. über einen externen Trigger oder durch eine User-Einstellung. Ist beispielsweise die Vorschubgeschwindigkeit bei gleichbleibender örtlicher Abtastfrequenz sehr hoch, so kann die Mittelungszahl dynamisch abhängig von der Vorschubgeschwindigkeit reduziert werden. Dadurch nimmt man zwar höheres Rauschen in Kauf, aber die Anwendung kann trotzdem erfüllt werden. Andererseits kann dadurch in schwierigen Situationen (äußere Störungen, geringe Signale) durch ein langsames Scannen ein maximales Signal-Rausch-Verhältnis aus den Messdaten erzielt werden. Die Verwendung eines digitalen Stapelspeichers schließt nicht aus, dass zuvor analoge Filter eingesetzt werden, welche ebenfalls als Mittelung wirken.

In einer bevorzugten Verfahrensvariante werden aus den Empfangssignalen von einer Steuer- und Auswerteeinheit mehrere Tiefenschnittbilder berechnet. Aus den Tiefenschnittbildern wird besonders bevorzugt eine Draufsicht berechnet und auf der Anzeigeeinheit angezeigt, wobei die Draufsicht als Mittelwert, Median, Maximalwert oder gewichtete Summe über einen Tiefenbereich zwischen einer ersten Tiefe und einer zweiten Tiefe berechnet wird. Durch die Draufsicht erhält der Bediener einen direkten räumlichen Eindruck, wo sich die Objekte im Untergrund befinden. Besonders bevorzugt ist der Tiefenbereich verstellbar ausgebildet, so dass der Bediener die Anzeige der Draufsicht auf bestimmte Tiefenbereiche beschränken kann.

Besonders bevorzugt werden in der Draufsicht nur Objekte dargestellt, die einen Schwellwert überschreiten, wobei der Schwellwert besonders bevorzugt verstellbar ist. Die Verstellbarkeit des Schwellwertes ermöglicht es dem Bediener, die Darstellung der Draufsicht an seine Anforderungen anzupassen. Artefakte und Störungen können über den Schwellwert eliminiert werden, so dass die Draufsicht nur die Objekte zeigt, die der Bediener darstellen möchte.

Besonders bevorzugt werden die Tiefenschnittbilder interpoliert. Durch die Interpolation der Tiefenschnittbilder kann die Auflösung der Objekte in der Draufsicht erhöht werden. Die Interpolation eignet sich beispielsweise für geführte Detektionsvorrichtungen, die in einer linearen Vorschubbewegung über den Untergrund bewegt werden.

Bevorzugt werden ein erster Magnetfeldgradient in einer ersten Richtung und ein zweiter Magnetfeldgradient in einer zweiten Richtung erfasst, wobei die erste und zweite Richtung besonders bevorzugt senkrecht zueinander angeordnet sind. In einer besonders bevorzugten Variante ist vorgesehen, dass die erste Sensoreinheit in einer Vorschubrichtung über den Untergrund bewegt wird, der erste Magnetfeldgradient in einer zur Vorschubrichtung senkrechten horizontalen Richtung erfasst wird und der zweite Magnetfeldgradient in einer zur Vorschubrichtung und zur horizontalen Richtung senkrechten Tiefenrichtung erfasst wird. Aus den Magnetfeldgradienten in der horizontalen Richtung und der Tiefenrichtung kann der Verlauf einer Stromleitung im Untergrund bestimmt werden.

Besonders bevorzugt werden erste und zweite Magnetfeldsensorelemente in der horizontalen Richtung abwechselnd angeordnet und aus dem ersten Magnetfeldgradienten und dem zweiten Magnetfeldgradienten von benachbarten ersten und zweiten Magnetfeldsensorelementen wird jeweils ein mittlerer Betrag berechnet. Durch die abwechselnde Anordnung der Magnetfeldsensorelemente entlang der horizontalen Richtung wird die Anzahl der Magnetfeldsensorelemente, die notwendig ist, um den räumlichen Verlauf einer Stromleitung im Untergrund zu bestimmen, reduziert.

Aus den mittleren Beträgen der benachbarten ersten und zweiten Magnetfeldsensorelemente wird besonders bevorzugt von der Steuer- und Auswerteeinheit eine horizontale Darstellung berechnet, die horizontale Darstellung wird von der Steuer- und Auswerteeinheit an eine Anzeigeeinheit übertragen und auf der Anzeigeeinheit dargestellt. Der Bediener erhält aus der horizontalen Darstellung einen räumlichen Eindruck davon, wo die Stromleitung im Untergrund verläuft.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer undloder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können.

Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein.

Es zeigen:
- FIG. 1: die Anwendung einer erfindungsgemäßen Detektionsvorrichtung in einem Innenraum, der einen Betonboden mit einem eingebetteten Eisengitter und eine gemauerte Rückwand aus Ziegelsteinen mit horizontal und vertikal verlaufenden Stromleitungen aufweist;
- FIG. 2A, B: eine erste Ausführungsform einer erfindungsgemäßen, handgeführten Detektionsvorrichtung in einer Ansicht auf eine dem zu detektierenden Untergrund abgewandten Oberseite der Detektionsvorrichtung (FIG. 2A) und eine im Inneren angeordnete Messeinrichtung mit einer ersten Sensoreinheit und einer zweiten Sensoreinheit in einer Ansicht auf eine dem zu detektierenden Untergrund zugewandten Unterseite der Detektionsvorrichtung (FIG. 2B);
- FIG. 3A, B: den Aufbau eines einzelnen Radarsensorelementes der Radarsensoreinheit (FIG. 3A) und die Radarsensoreinheit der FIG. 2B mit drei Radarsensorelementen in einem Blockschaltbild (FIG. 3B);
- FIG. 4A,B: die Radarsensoreinheit der FIG. 2B mit drei Radarsensorelementen in einer schematischen Darstellung (FIG. 4A) und eine Messaufnahme der Detektionsvorrichtung, die in einem ersten Betriebsmodus in einer Vorschubrichtung über den zu detektierenden Untergrund bewegt wird, mit einer Draufsicht und einer Tiefendarstellung (FIG. 4B);
- FIG. 5: eine Messaufnahme der Detektionsvorrichtung, die in einem zweiten Betriebsmodus in parallelen Bahnen, in zwei senkrechten Vorschubrichtungen über den zu detektierenden Untergrund bewegt wird, mit einer Draufsicht und zwei Tiefenschnittbildern;
- FIG. 6A-D: eine weitere Ausführungsform einer erfindungsgemäßen Detektionsvorrichtung, die eine Radarsensoreinheit und eine Stromsensoreinheit umfasst (FIG. 6A), die Stromsensoreinheit der FIG. 6A mit einem ersten und zweiten Magnetfeldsensorelement (FIG. 6B) sowie das erste Magnetfeldsensorelement (FIG. 6C) und das zweite Magnetfeldsensorelement (FIG. 6D) in einer vergrößerten Darstellung; und
- FIG. 7A, B: eine erste Ausführungsform einer Sensoreinheit für eine gehaltene Detektionsvorrichtung mit vier Sensorelementen, die regelmässig in Reihen und Spalten angeordnet sind (FIG. 7A), und eine zweite Ausführungsform mit fünf Sensorelementen in einer verschachtelten Anordnung (FIG. 7B).

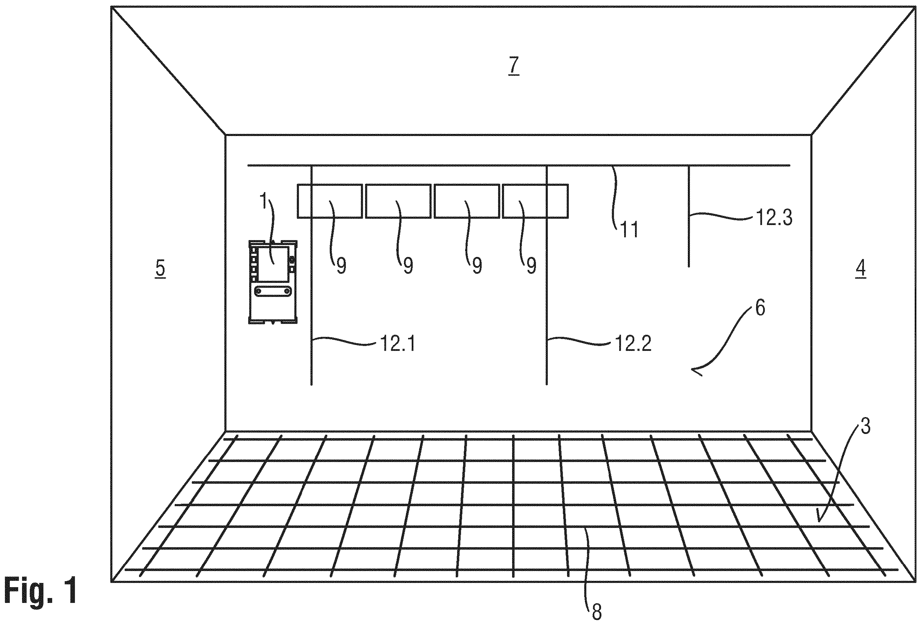

**FIG. 1** zeigt die Anwendung einer erfindungsgemäßen Vorrichtung **1** zum Detektieren eines Objektes in einem Innenraum **2**. Die Detektionsvorrichtung 1 ist als gehaltene oder geführte Detektionsvorrichtung ausgebildet. Eine gehaltene Detektionsvorrichtung wird ohne Vorschubbewegung über den zu detektierenden Untergrund gehalten und eine geführte Detektionsvorrichtung wird entlang einer linearen Bahn oder in einer beliebigen Bahn über einen zu detektierenden Untergrund geführt. Als handgehalten bzw. handgeführt wird eine Detektionsvorrichtung bezeichnet, die ein Bediener mit der Hand über den zu detektierenden Untergrund hält oder führt.

Der Innenraum 2 besteht aus einem Boden **3**, einer rechten und linken Seitenwand **4**, **5**, einer Rückwand **6** und einer Decke **7**. Der Boden **3** besteht aus einer Betondecke mit einem eingebetteten Eisengitter **8**. Die Rückwand 6 ist aus Mauersteinen bzw. Ziegelsteinen **9** aufgebaut. In der Rückwand 7 verlaufen eine horizontal angeordnete Stromleitung **11** und drei vertikal angeordnete Stromleitungen **12.1, 12.2, 12.3,** die von der horizontal angeordneten Stromleitung 11 abzweigen.

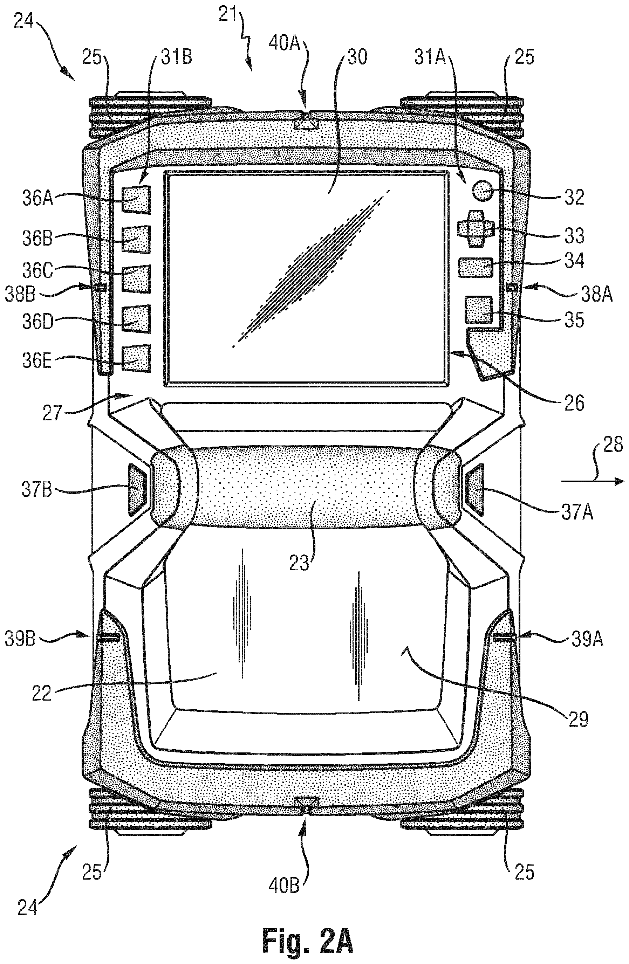

**FIG. 2A** zeigt eine erste Ausführungsform einer handgeführten Detektionsvorrichtung **21**, die ein Gehäuse **22**, einen Handgriff **23**, eine Bewegungseinheit **24** mit vier Rädern **25**, eine Anzeigeeinheit **26** und eine Bedienungseinheit **27** umfasst.

Der Benutzer führt die Detektionsvorrichtung 21 mit Hilfe des Handgriffes 23 und der Bewegungseinheit 24 in einer Vorschubrichtung **28** über einen zu detektierenden Untergrund, der beispielsweise als Boden 3 oder Rückwand 6 ausgebildet ist. Der Handgriff 23 ist auf einer dem Untergrund 3, 6 während einer Messung abgewandten Oberseite **29** der Detektionsvorrichtung 21 angeordnet und mit dem Gehäuse 22 verbunden. Die Anzeigeeinheit 26 umfasst ein Display **30**, auf dem die Messergebnisse der Detektionsvorrichtung 21 als Messaufnahme angezeigt werden.

Die Bedienungseinheit 27 dient zum Starten einer Messung und zum Einstellen der Detektionsvorrichtung 21. Die Bedienungseinheit 27 besteht aus einer ersten und zweiten Bedienungseinheit **31A**, **31B,** die neben dem Display 30 auf der Oberseite 29 angeordnet sind. Die erste Bedienungseinheit 31A umfasst eine Ein/Aus-Taste **32** zum Ein- und Ausschalten der Detektionsvorrichtung 21, eine Schaltwippe **33**, mit der eine Markierungslinie oder ein Markierungskreuz in einer Darstellung auf dem Display 30 positioniert und verschoben werden können, sowie zwei weitere Bedienungstasten **34**, **35**. Die zweite Bedienungseinheit 31B umfasst fünf Funktionstasten **36A-36E** zum Aktivieren verschiedener Funktionen eines Funktionsmenüs, das auf dem Display 30 dargestellt ist. Die Bedienungseinheit 27 umfasst außerdem zwei Start/Stop-Tasten **37A, 37B,** die zum Starten und Beenden einer Messung dienen und am Handgriff 23 angeordnet sind.

Das Detektionsfeld der Detektionsvorrichtung 21 ist begrenzt und entspricht nicht der vollen Länge des Gehäuses 22. Die Begrenzung des Detektionsfeldes wird an der rechten Gehäusekante des Gehäuses 22 über eine obere und untere rechte Markierung **38A, 39A** und an der linken Gehäusekante über eine obere und untere linke Markierung **38B, 39B** angezeigt. Mit Hilfe der Markierungen kann der Bediener die Detektionsvorrichtung 21 auf dem zu detektierenden Untergrund platzieren. Die Mitte des Detektionsfeldes wird an der oberen und unteren Gehäusekante über eine obere und untere Markierung **40A, 40B** angezeigt.

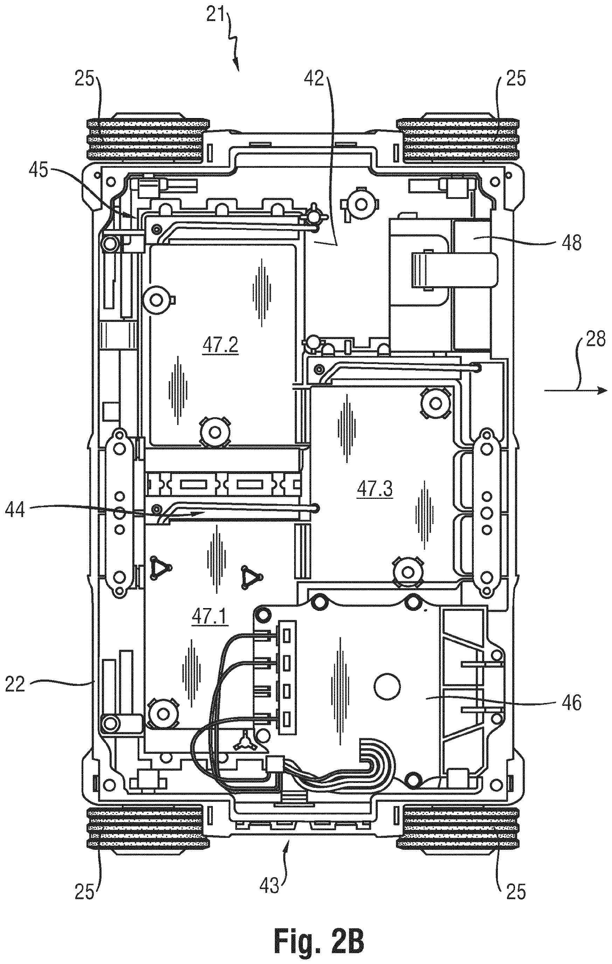

**FIG. 2B** zeigt die Detektionsvorrichtung 21 in einer Ansicht auf eine dem Untergrund 3, 6 während einer Messung zugewandte Unterseite **42**. An der Unterseite 42 befindet sich im Inneren des Gehäuses 22 eine Messeinrichtung **43**. Die Messeinrichtung 43 umfasst eine Sensoreinheit **44**, eine Steuer- und Auswerteeinheit **45** und eine Spannungsquelle **46**.

Die Sensoreinheit 44 weist ein erstes Sensorelement **47.1**, ein zweites Sensorelement **47.2** und ein drittes Sensorelement **47.3** auf. Die Sensorelemente 47.1-47.3 sind als induktive Sensoren, kapazitive Sensoren, Radarsensoren, Magnetfeldsensoren oder sonstige, zum Detektieren von Objekten in Untergründen geeignete, Sensoren ausgebildet. Die Steuer- und Auswerteeinheit 45 steuert die Sensorelemente 47.1-47.3 und ist über eine Kommunikationsverbindung mit der Sensoreinheit 44 und über eine weitere Kommunikationsverbindung mit der Anzeigeeinheit 26 verbunden. Die Steuer- und Auswerteeinheit 45 dient zur Steuerung der Sensorelemente 47.1-47.3, zur Auswertung der von den Sensorelementen 47.1-47.3 gelieferten Empfangssignale und zur Ausgabe eines Messergebnisses in Form einer Messaufnahme auf der Anzeigeeinheit 26. Die Spannungsquelle 46 ist mit der Sensoreinheit 44, der Steuer- und Auswerteeinheit 45 und der Anzeigeeinheit 26 verbunden und stellt den Einheiten 44, 45, 26 die für den Messbetrieb benötigte elektrische Energie zur Verfügung.

Die Sensorelemente 47.1-47.3 sind in einer Ebene parallel zur Unterseite des Gehäuses 22 verschachtelt in einer ersten und zweiten Reihe angeordnet. Als verschachtelte Anordnung wird eine Anordnung der Sensorelemente 47.1-47.3 bezeichnet, bei der die Sensorelemente nicht matrixförmig in Reihen und Spalten angeordnet sind, sondern die Sensorelemente einer Reihe bzw. Spalte in den Zwischenräumen der vorherigen und der folgenden Reihe bzw. Spalte angeordnet sind. Das erste und zweite Sensorelement 47.1, 47.2 sind in der ersten Reihe und das dritte Sensorelement 47.3 in der zweiten Reihe im Zwischenraum zwischen dem ersten und zweiten Sensorelement 47.1, 47.2 angeordnet. Grundsätzlich eignen sich alle bekannten regelmäßigen Anordnungen von Elementen in einer Ebene (quadratisch, rechteckig, hexagonal, rhombisch und rhomboedrisch) zur Anordnung der Sensorelemente.

Die Detektionsvorrichtung 21 wird während der Messung in der Vorschubrichtung 28 mit der Vorschubgeschwindigkeit über den zu detektierenden Untergrund bewegt. Die Messeinrichtung 43 umfasst zusätzlich eine Koordinatenerfassungseinheit **48**, mit der die Koordinaten in der Vorschubrichtung 28 erfasst werden. Bei einer handgeführten Detektionsvorrichtung, mit der eine beliebige Vorschubbewegung ausgeführt werden kann, werden mit der Koordinatenerfassungseinheit die Koordinaten in der Ebene parallel zur Unterseite des Gehäuses 22 erfasst.

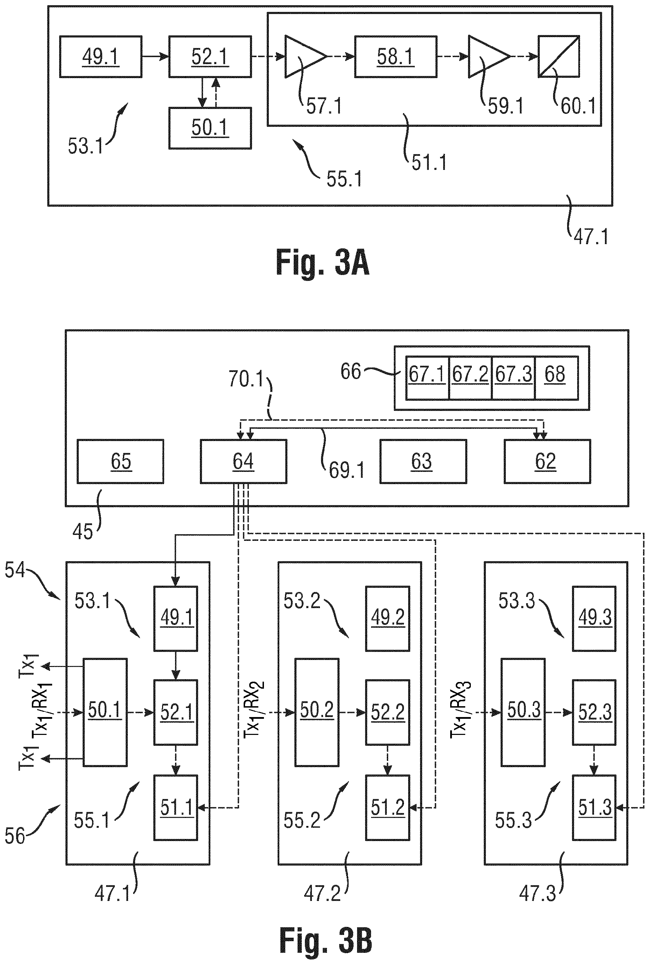

In der in FIG. 2B gezeigten Ausführungsform sind die Sensorelemente 47.1-47.3 als Radarsensoren ausgebildet und arbeiten nach dem Pulsradarprinzip. **FIG. 3A** zeigt schematisch den Aufbau des ersten Radarsensorelementes 47.1, wobei der Aufbau analog für das zweite und dritte Radarsensorelement 47.2, 47.3 gilt.

Das Radarsensorelement 47.1 besteht aus einem Sender **49.1**, der beispielsweise als Ultra-Breitband-Pulsgenerator ausgebildet ist, einer Radarantenne **50.1**, einem Empfänger **51.1** und einem Richtkoppler **52.1**. Der Sender 49.1 sendet einen hochfrequenten Sendeimpuls aus. Die Radarantenne 50.1 wandelt die hochfrequente elektromagnetische Energie des Sendeimpulses in elektromagnetische Strahlung um und verteilt diese in bestimmte Raumrichtungen, indem sie die Impedanz des Leiters an die Impedanz der Umgebung anpasst. Erfolgt am Ursprungsort ab Beginn der Aussendung des Sendesignals eine Zeitmessung bis zum Eintreffen des Empfangssignals, lassen sich mit der bekannten Ausbreitungsgeschwindigkeit der Abstand zwischen dem Ursprungsort und dem Objekt berechnen und Tiefeninformationen in Z-Richtung über das Objekt gewinnen. Der Richtkoppler 52.1 trennt eingehende von ausgehenden Signalen. Über den Richtkoppler 52.1 wird somit die Radarantenne 50.1 im Sendemodus mit dem Sender 49.1 und im Empfangsmodus mit dem Empfänger 51.1 verbunden. Der Sender 49.1, der Richtkoppler 52.1 und die Radarantenne 50.1 im Sendemodus werden als Sendeelement **53.1** zusammengefasst; die Sendeelemente 53.1, 53.2, 53.3 der drei Radarsensorelemente 47.1-47.3 werden als Sendeeinheit **54** (FIG. 3B) bezeichnet. Der Empfänger 51.1, der Richtkoppler 52.1 und die Radarantenne 50.1 im Empfangsmodus werden als Empfangselement **55.1** zusammengefasst; die Empfangselemente 55.1, 55.2, 55.3 der drei Radarsensorelemente 47.1, 47.2, 47.3 werden als Empfangseinheit **56** (FIG. 3B) bezeichnet.

Der Empfänger 51.1 hat die Aufgabe, die von der Radarantenne 50.1 empfangenen Empfangssignale zu verstärken und zu verarbeiten und weist verschiedene Signalverarbeitungskomponenten auf. Zu den Signalverarbeitungskomponenten gehören ein als Low Noise Amplifier (abgekürzt LNA) ausgebildeter erster Verstärker **57.1**, eine Abtastverstärkerschaltung **58.1**, ein als Negative Feedback Amplifier (abgekürzt NFA) ausgebildeter zweiter Verstärker **59.1** und ein Analog-Digital-Wandler **60.1**. Neben den Signalverarbeitungskomponenten 57.1-60.1 eignen sich alle bekannten Signalverarbeitungskomponenten, die abhängig vom jeweiligen Einsatzgebiet zusätzlich oder alternativ zu den Signalverarbeitungskomponenten 57.1-60.1 eingesetzt werden.

**FIG. 3B** zeigt die Steuer- und Auswerteeinheit 45 und die drei Radarsensorelemente 47.1, 47.2, 47.3 der Radarsensoreinheit 44 in einem Blockschaltbild. Die Steuer- und Auswerteeinheit 45 weist verschiedene elektronische Komponenten zur Steuerung der Sensorelemente 47.1-47.3, zur Auswertung der von den Sensorelementen 47.1-47.3 gelieferten Empfangssignale und zur Ausgabe eines Messergebnisses auf der Anzeigeeinheit 26 auf. Zu den elektronischen Komponenten gehören eine Kontrolleinheit **62**, ein Oszillator **63**, eine Schalteinheit **64** und eine Verzögerungseinheit **65**, außerdem umfasst die Steuer- und Auswerteeinheit 45 eine Speichereinheit **66**.

Die Kontrolleinheit 62 ist als Mikrokontroller oder als integrierter Schaltkreis in Form eines Field Programmable Gate Array (abgekürzt FPGA) mit eingebettetem Kontroller ausgebildet und steuert die Schalteinheit 64 und die Verzögerungseinheit 65. Der Oszillator 63 dient als Zeitbasis für die Pulsgenerierung und die Steuerung, von dieser Zeitbasis wird die Impulsfolgefrequenz abgebildet. Als Impulsfolgefrequenz bzw. Pulsrepetitionsfrequenz (abgekürzt PRF) ist die Anzahl der Sendeimpulse pro Sekunde definiert. Die Schalteinheit 64 ist als Complex Programmable Logic Device (abgekürzt CPLD) ausgebildet; die Kontrolleinheit 62 stellt über die Schalteinheit 64 ein, welches Sendeelement in den Sendemodus und welches Empfangselement in den Empfangsmodus geschaltet wird. Die Verzögerungseinheit 65 ist beispielsweise als digitale Verzögerungseinheit (Aneinanderreihung von ansteuerbaren Logik-Gattern, bspw. OnSemi MC100EP196) oder als analoge Verzögerungseinheit (Schwellwert-Verzögerung über ein Logik-Gatter, Komparator) ausgebildet; die Kontrolleinheit 62 stellt über die Verzögerungseinheit 65 die Zeitverzögerung für den Empfangsmodus ein. Die Speichereinheit 66 besteht aus einem Stapelspeicher **67.1, 67.2, 67.3** für jedes Radarsensorelement 47.1-47.3 und einem Hauptspeicher **68**.

Eine Messung besteht aus einem Messschritt, der mit einer Wiederholfrequenz von 50-5.000 Hz wiederholt wird. Der Messschritt besteht aus drei Teilmessschritten: In einem ersten Teilmessschritt sendet das erste Radarsensorelement 47.1 ein erstes Sendesignal **TX₁** aus und die drei Radarsensorelemente 47.1-47.3 empfangen jeweils ein Empfangssignal **TX₁/RX₁, TX₁/RX₂, TX₁/RX₃.** In einem zweiten Teilmessschritt sendet das zweite Radarsensorelement 47.2 ein zweites Sendesignal **TX₂** aus und die drei Radarsensorelemente 47.1-47.3 empfangen jeweils ein Empfangssignal **TX₂/RX₁, TX₂/RX₂, TX₂/RX₃.** In einem dritten Teilmessschritt sendet das dritte Radarsensorelement 47.3 ein drittes Sendesignal **TX₃** aus und die drei Radarsensorelemente 47.1-47.3 empfangen jeweils ein Empfangssignal **TX₃/RX₁, TX₃/RX₂, TX₃/RX₃.** Die Radarsensorelemente 47.1-47.3 werden so über die Steuer- und Auswerteeinheit 45 gesteuert, dass im Sendemodus immer nur ein Radarsensorelement ein Sendesignal aussendet und im Empfangsmodus alle Radarsensorelemente 47.1-47.3 ein Empfangssignal empfangen. Die Sendesignale TX1, TX2, TX3 können aus einer Sendeimpulsfolge bestehen.

In FIG. 3B ist der erste Teilmessschritt dargestellt. Die Kontrolleinheit 62 erzeugt ein erstes Steuersignal **69.1** und ein zweites, zeitgleiches Steuersignal **70.1.** Das erste Steuersignal 69.1 dient zur Steuerung des ersten Sendeelementes 53.1-53.3; die Kontrolleinheit 62 steuert über die Schalteinheit 64, dass das erste Sendeelement 53.1 in den Sendemodus geschaltet wird und das Sendesignal TX₁ in den Untergrund aussendet. Das erste Steuersignal 69.1 wird direkt über die Schalteinheit 64 an das erste Sendeelement 53.1 übermittelt. Das zweite Steuersignal 70.1 dient zur Steuerung der Empfangselemente 55.1-55.3; die Kontrolleinheit 62 stellt über die Schalt- und Verzögerungseinheiten 64, 65 die Zeitverzögerung ein und steuert die Schalteinheit 64 so, dass alle Empfangselemente 55.1-55.3 in den Empfangsmodus geschaltet werden. Über den zusätzlichen Weg, den das zweite Steuersignal 70.1 zwischen der Schalteinheit 64 und der Verzögerungseinheit 65 zurücklegen muss, wird die Zeitverzögerung für den Empfangsmodus mittels bekannter Methoden, wie beispielsweise Interleaved Sampling (abgekürzt IS) oder Random Interleaved Sampling (abgekürzt RIS), eingestellt.

Nach dem Aussenden des ersten Sendesignals empfangen die Radarantennen 50.1-50.3 die Empfangssignale TX₁/RX₁, TX₁/RX₂, TX₁/RX₃. Über die Richtkoppler 52.1-52.3 werden die Empfangssignale TX₁/RX₁, TX₁/RX₂, TX₁/RX₃ an die Empfänger 51.1-51.3 weitergeleitet und mittels der Signalverarbeitungskomponenten verarbeitet. Über die Kontrolleinheit 62 werden die verarbeiteten Empfangssignale in die Stapelspeicher 67.1-67.3 der Speichereinheit 66 übertragen und gespeichert.

Analog zum ersten Teilmessschritt werden im zweiten Teilmessschritt über ein Steuersignal **69.2** das zweite Sendeelement 53.2 und im dritten Teilmessschritt über ein Steuersignal 69.3 das dritte Sendeelement 53.3 in den Sendemodus geschaltet.

Nach jedem dritten Teilmessschritt werden die in den Stapelspeichern 67.1-67.3 gespeicherten Empfangssignale TXᵢ/RXⱼ, i, j = 1, 2, 3, gemittelt. Das Stapeln (Mitteln) und Speichern der Empfangssignale TXᵢ/RXⱼ, i, j = 1, 2, 3, wird als Stacking bezeichnet. Das Stacking wird solange ausgeführt, bis ein Triggersignal, das die Steuer- und Auswerteeinheit 45 aussendet, den aktuellen Stapel bzw. Stack beendet und einen neuen Stapel bzw. Stack erzeugt. Die Empfangssignale des nächsten Messschrittes werden in den neuen Stapel gelegt und gespeichert.

Um die Genauigkeit einer Messung zu erhöhen und um verschiedene Werkstoffe unterscheiden zu können, werden die Sendesignale in einem weiterentwickelten Verfahren von den Radarsensorelementen 47.1-47.3 mit zwei verschiedenen Polarisationsrichtungen **P1**, **P2** ausgesandt. Bei drei Radarsensorelementen 47.1-47.3, die jeweils ein Sendesignal TX_{i,P1}, TX_{i,P2}, i = 1, 2, 3 mit zwei verschiedenen Polarisationsrichtungen P1, P2 aussenden, resultieren 36 Empfangssignale, die in Tabelle 1 dargestellt sind.

**Tabelle 1 Empfangssignale bei drei Radarsensorelementen, die als Sendeelement und Empfangselement agieren und mit zwei verschiedenen Polarisationsrichtungen senden und empfangen**

| | i=1, P=P1 | i=1, P=P2 | i=2, P=P1 | i=2, P=P2 | i=3, P=P1 | i=3, P=P2 |
|---|---|---|---|---|---|---|
| j=1, P=P1 | TX_{1,P1}/RX_{1,P1} | TX_{1,P2}/RX_{1,P1} | TX_{2,P1}/RX_{1,P1} | TX_{2,P2}/RX_{1,P1} | TX_{3,P1}/RX_{1,P1} | TX_{3,P2}/RX_{1,P1} |
| j=1, P=P2 | TX_{1,P1}/RX_{1,P2} | TX_{1,P2}/RX_{1,P2} | TX_{2,P1}/RX_{1,P2} | TX_{2,P2}/RX_{1,P2} | TX_{3,P1}/RX_{1,P2} | TX_{3,P2}/RX_{1,P2} |
| j=2, P=P1 | TX_{1,P1}/RX_{2,P1} | TX_{1,P2}/RX_{2,P1} | TX_{2,P1}/RX_{2,P1} | TX_{2,P2}/RX_{2,P1} | TX_{3,P1}/RX_{2,P1} | TX_{3,P2}/RX_{2,P1} |
| j=2, P=P2 | TX_{1,P1}/RX_{2,P2} | TX_{1,P2}/RX_{2,P2} | TX_{2,P1}/RX_{2,P2} | TX_{2,P2}/RX_{2,P2} | TX_{3,P1}/RX_{2,P2} | TX_{3,P2}/RX_{2,P2} |
| j=3, P=P1 | TX_{1,P1}/RX_{3,P1} | TX_{1,P2}/RX_{3,P1} | TX_{2,P1}/RX_{3,P1} | TX_{2,P2}/RX_{3,P1} | TX_{3,P1}/RX_{3,P1} | TX_{3,P2}/RX_{3,P1} |
| j=3, P=P2 | TX_{1,P1}/RX_{3,P2} | TX_{1,P2}/RX_{3,P2} | TX_{2,P1}/RX_{3,P2} | TX_{2,P2}/RX_{3,P2} | TX_{3,P1}/RX_{3,P2} | TX_{3,P2}/RX_{3,P2} |

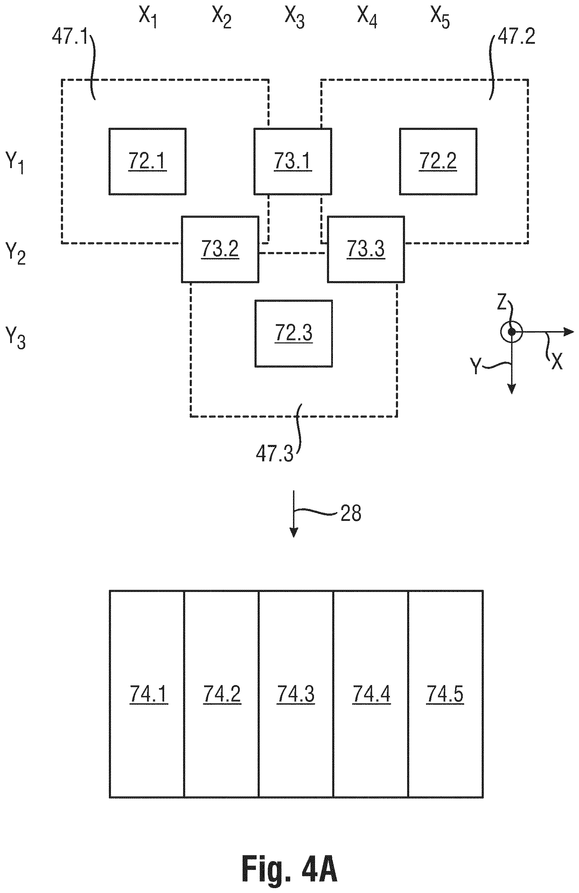

**FIG. 4A** zeigt die Radarsensoreinheit 44 mit den drei Radarsensorelemente 47.1, 47.2, 47.3 in einer schematischen Darstellung, die die räumliche Zuordnung der neun Empfangssignale TXᵢ/RXⱼ, mit i, j = 1, 2, 3 erläutert.

Die Radarsensorelemente 47.1-47.3 sind in einer Ebene parallel zur Gehäuseunterseite der Detektionsvorrichtung 21 angeordnet. Die Ebene parallel zur Gehäuseunterseite ist von einer X-Richtung und einer Y-Richtung aufgespannt, wobei die Vorschubrichtung 28 der Y-Richtung und eine zur Vorschubrichtung 28 senkrechte Richtung der X-Richtung entsprechen. Eine zur XY-Ebene senkrechte Richtung in die Tiefe des Untergrundes ist als Z-Richtung definiert.

Die Empfangssignale umfassen drei monostatische Empfangssignale TXᵢ/RXᵢ, mit i = 1, 2, 3 und sechs bistatische Empfangssignale TXᵢ/RXⱼ, mit i, j = 1, 2, 3 und i ≠ j. Monostatisch bezeichnet den Modus, dass ein Sensorelement sendet und gleichzeitig empfängt, und bistatisch den Modus, dass ein Sensorelement sendet und ein anderes Sensorelement empfängt.

Die neun Empfangssignale werden in der XY-Ebene sechs begrenzten Flächenbereichen zugeordnet. Jedem Sensorelement 47.1, 47.2, 47.3 ist ein Flächenbereich **72.1, 72.2, 72.3,** der als monostatischer Flächenbereich bezeichnet wird, direkt zugeordnet. Den monostatischen Flächenbereichen 72.1, 72.2, 72.3 werden die monostatischen Empfangssignale TXᵢ/RXᵢ, mit i = 1, 2, 3 zugeordnet, das erste monostatische Empfangssignal TX₁/RX₁ dem ersten monostatischen Flächenbereich 72.1, das zweite monostatische Empfangssignal TX₂/RX₂ dem zweiten monostatischen Flächenbereich 72.2 und das dritte monostatische Empfangssignal TX₃/RX₃ dem dritten monostatischen Flächenbereich 72.3. Der erste monostatische Flächenbereich 72.1 weist in der XY-Ebene die Koordinaten X₁ und Y₁ auf, der zweite monostatische Flächenbereich 72.2 die Koordinaten X₅ und Y₁ und der dritte monostatische Flächenbereich 72.3 die Koordinaten X₃ und Y₃.

FIG. 4A zeigt drei weitere begrenzte Flächenbereiche **73.1, 73.2, 73.3,** die als bistatische Flächenbereiche bezeichnet werden. Die bistatischen Empfangssignale TX₁/RX₂ und TX₂/RX₁ werden gemittelt und das gemittelte Signal wird dem bistatischen Flächenbereich 73.1, der zwischen dem ersten und zweiten Flächenbereich 72.1 und 72.2 angeordnet ist, zugeordnet. Die bistatischen Empfangssignale TX₁/RX₃ und TX₃/RX₁ werden gemittelt und das gemittelte Signal wird dem Flächenbereich 73.2, der zwischen dem ersten und dritten Flächenbereich 72.1 und 72.3 angeordnet ist, zugeordnet. Die bistatischen Empfangssignale TX₂/RX₃ und TX₃/RX₂ werden gemittelt und das gemittelte Signal wird dem Flächenbereich 73.3, der zwischen dem zweiten und dritten Flächenbereich 72.2 und 72.3 angeordnet ist, zugeordnet. Der erste bistatische Flächenbereich 73.1 weist in der XY-Ebene die Koordinaten X₃ und Y₁ auf, der zweite bistatische Flächenbereich 73.2 die Koordinaten X₃ und Y₂ und der dritte bistatische Flächenbereich 73.3 die Koordinaten X₃ und Y₂.

Neben der Mittelwertbildung kann aus den bistatischen Empfangssignalen beispielsweise ein Median, ein Maximalwert oder eine gewichtete Summe berechnet werden. Unter dem Begriff "gemitteltes Signal" wird ein Signal verstanden, welches durch eine geeignete mathematische Funktion, wie Mittelwert, Median, Maximalwert, gewichtete Summe, aus den bistatischen Empfangssignalen berechnet wird.

Die Impulsfolgefrequenz PRF liegt im Frequenzbereich von 1 kHz bis 25 MHz und übersteigt die örtliche Abtastfrequenz um mehrere Größenordnungen, so dass die Verschiebung der Detektionsvorrichtung 21 in Y-Richtung aufgrund der Vorschubbewegung in einem Messschritt vernachlässigt werden kann.

Die sechs Flächenbereiche 72.1-72.3, 73.1-73.3 bilden in der Vorschubrichtung 28 fünf Empfangskanäle **74.1, 74.2, 74.3, 74.4, 74.5**, die durch einen Mittelpunkt und eine Breite festgelegt sind. Die Mittelpunkte der Empfangskanäle 74.1-74.5 entsprechen den X-Koordinaten X₁, X₂, X₃, X₄, X₅ und die Breite der Empfangskanäle 74.1-74.5 entspricht der Breite der Flächenbereiche. Durch die Vorschubbewegung der Detektionsvorrichtung 21 in der Vorschubrichtung 28 werden die Y-Koordinaten verändert. Die Koordinatenerfassungseinheit 48 erfasst die Y-Koordinaten der Flächenbereiche 72.1-72.3, 73.1-73.3 bzw. erfasst eine Referenzkoordinate, die in einem bekannten Abstand zu den Flächenbereichen 72.1-72.3, 73.1-73.3 angeordnet ist.

Während der Vorschubbewegung werden die Empfangssignale erfasst und aus den erfassten Empfangssignalen wird bereits ein Teil eines Tiefenschnittbildes berechnet. Dieser Teil des Tiefenschnittbildes wird über die Echtzeit-Kommunikationsverbindung von der Steuer- und Auswerteeinheit 45 an die Anzeigeeinheit 26 übertragen. Das Tiefenschnittbild wird während der Vorschubbewegung regelmäßig aktualisiert. Die Empfangskanäle 74.1-74.5 bilden die Spuren, in der die Empfangssignale dargestellt und regelmäßig aktualisiert werden.

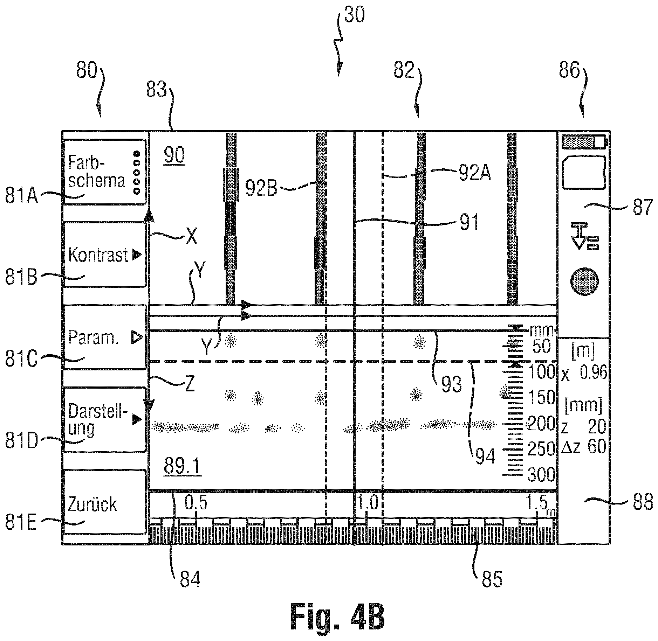

**FIG. 4B** zeigt das Display 30 der Anzeigeeinheit 26 mit einer Messaufnahme der Detektionsvorrichtung 21 in einem ersten Betriebsmodus, in dem die Detektionsvorrichtung 21 in einer linearen Vorschubbewegung entlang der Vorschubrichtung 28 über den Untergrund bewegt wird. Im ersten Betriebsmodus ist die Breite der Messaufnahme in X-Richtung auf die Breite des Detektionsfeldes beschränkt. Die Breite des Detektionsfeldes wird dem Bediener über die oberen und unteren Markierungen 38A, 38B, 39A, 39B auf dem Gehäuse 22 der Detektionsvorrichtung 21 angezeigt. Die Auflösung in X-Richtung ist durch die Anzahl der Empfangskanäle 74.1-74.5 festgelegt.

Das Display 30 ist während der Anzeige einer Messaufnahme im ersten Betriebsmodus in drei Hauptfelder unterteilt: Am linken Rand des Displays 30 ist in einem ersten Hauptfeld **80** ein Funktionsmenü dargestellt, das bis zu fünf Funktionen **81A-81E** enthält. Jede Funktion 81A-81E wird durch die links liegende Funktionstaste 36A-36E der zweiten Bedienungseinheit 31B aktiviert. Ein zweites Hauptfeld **82** ist im mittleren Bereich des Displays 30 angeordnet und dient der Darstellung der Messaufnahme. Das zweite Hauptfeld 82 ist im ersten Betriebsmodus in drei Teilbereiche unterteilt ist, die untereinander angeordnet sind: In einem oberen Teilbereich **83** ist eine Draufsicht gezeigt, in einem mittleren Teilbereich **84** ein Tiefenschnittbild und in einem unteren Teilbereich **85** eine zugehörige Messskala. Am rechten Rand des Displays 30 sind in einem dritten Hauptfeld **86** verschiedene Informationen für den Bediener dargestellt. Das dritte Hauptfeld 86 ist in einen oberen Statusbereich **87** und einen unteren Informationsbereich **88** unterteilt. Der Statusbereich 87 enthält unter anderem Informationen über einen Ladezustand der Spannungsquelle 46 oder eine Speicherkarte, wobei die Informationen in Form von Piktogrammen im Statusbereich 87 angezeigt werden. Im Informationsbereich 88 werden aktuelle Koordinaten der Messaufnahme angezeigt.

Ein Tiefenschnittbild ist eine zweidimensionale Darstellung der Messergebnisse in einer Ebene, die senkrecht zur XY-Ebene verläuft; auf der vertikalen Achse des Tiefenschnittbildes sind die Tiefenrichtung und auf der horizontalen Achse eine horizontale Richtung in der XY-Ebene aufgetragen. Bei einer linearen Vorschubbewegung entspricht die horizontale Richtung insbesondere der Vorschubrichtung; bei einer handgehaltenen Detektionsvorrichtung oder der Bewegung einer handgeführten Detektionsvorrichtung entlang einer beliebigen Bahn entspricht die horizontale Richtung insbesondere einer durch die Detektionsvorrichtung festgelegten Vorzugsrichtung, beispielsweise einer Gehäusekante. In dem Tiefenschnittbild werden Rohdaten, d.h. die als Hyperbeln ausgebildeten Empfangssignale, oder weiterverarbeitete Empfangssignale dargestellt. Die Empfangssignale werden mit Hilfe von Bildverarbeitungs- und Mustererkennungsverfahren bearbeitet, um Informationen über die Objekte im Untergrund zu gewinnen. In Tiefenschnittbildern, die weiterverarbeitete Empfangssignale verwenden, werden die Objekte geometrisch als Objekte dargestellt; die Form und Größe der Objekte wird durch unterschiedliche Farben angezeigt.

Eine Draufsicht ist eine zweidimensionale Darstellung der Messergebnisse in der XY-Ebene, die aus den Tiefenschnittbildern als Mittelwert, Median, Maximalwert, gewichtete Summe oder sonstige geeignete mathematische Funktion über einen Tiefenbereich zwischen einer ersten und zweiten Tiefe berechnet wird. Dabei wird der Tiefenbereich über die erste und zweite Tiefe oder über eine Schichttiefe und eine Schichtdicke festgelegt. Der Tiefenbereich, über den die Draufsicht gemittelt wird, ist über die Schaltwippe 33 der ersten Bedienungseinheit 31A verstellbar ausgebildet. In der Draufsicht sind nur diejenigen Objekte dargestellt, die innerhalb des eingestellten Tiefenbereichs liegen. Alle anderen Objekte, die sich außerhalb des eingestellten Tiefenbereichs befinden, werden in der Draufsicht nicht dargestellt.

Der mittlere Teilbereich 84 zeigt ein erstes Tiefenschnittbild **89.1** des Empfangskanals 74.1, bei dem die Objekte im Untergrund durch Mustererkennung identifiziert wurden; das Eisengitter 8 ist im Querschnitt zu erkennen. Das Tiefenschnittbild wird von der Tiefenrichtung Z als vertikaler Achse und der Vorschubrichtung 28 als horizontaler Achse aufgespannt. Neben dem ersten Tiefenschnittbild 89.1 des ersten Empfangskanals 74.1 sind weitere Tiefenschnittbilder **89.2-89.5** für die weiteren Empfangskanäle 74.2-74.5 hinterlegt. Der Übergang zwischen den Tiefenschnittbildern 89.1-89.5 bleibt unbearbeitet oder wird mit bekannten Interpolationsmethoden interpoliert. Der Bediener kann mittels der Schaltwippe 33 zwischen den Tiefenschnittbildern 89.1-89.5 hin- und herwechseln.

Der obere Teilbereich 83 zeigt eine Draufsicht **90**, die aus den Tiefenschnittbildern 89.1-89.5 über einen Tiefenbereich zwischen einer ersten Tiefe **z** und einer zweiten Tiefe **z + Δz** berechnet wurde. Über Mustererkennungsverfahren wurden die Gitterstäbe des Eisengitters 8 in den gemittelten Empfangssignalen erkannt und als Gitterstäbe in der Draufsicht 90 dargestellt. Der Bediener kann bei der Farbdarstellung der Tiefenschnittbilder 89.1-89.5 und der Draufsicht 90 zwischen mehreren Farbschemata wählen. Die Farbschemata dienen zur unterschiedlichen Darstellung und zur Anpassung an die Umgebungshelligkeit, sie haben keine weitere Funktion.

Im zweiten Hauptfeld 82 des Displays 30 sind mehrere vertikale und horizontale Markierungslinien angeordnet, die zum Teil über die Schaltwippe 33 verschiebbar sind. Die Schaltwippe 33 ist über das Funktionsmenü zwischen verschiedenen Einstellungen verstellbar; im Statusbereich 87 ist die aktuelle Einstellung der Schaltwippe 33 angezeigt. In einer ersten Einstellung sind die Schichttiefe und die Schichtdicke des Tiefenbereichs über die Schaltwippe 33 einstellbar.

FIG. 4B zeigt eine durchgezogene, vertikale Markierungslinie **91**, zwei gepunktete, vertikale Markierungslinien **92A, 92B** sowie eine durchgezogene und eine gestrichelte, horizontale Markierungslinie **93, 94**. Die durchgezogene, vertikale Markierungslinie 91 kennzeichnet die Mitte des Detektionsfeldes und entspricht der Position der Markierungen 40A, 40B an der Ober- und Unterkante des Gehäuses 22. Die gepunktete, vertikale Markierungslinie 92A zeigt die rechte Gehäusekante und die gepunktete, vertikale Markierungslinie 92B die linke Gehäusekante des Gehäuses 22 der Detektionsvorrichtung 21 an. Die durchgezogene, horizontale Markierungslinie 93 legt die Schichttiefe und die gestrichelte, horizontale Markierungslinie 94 die Schichtdicke des Tiefenbereichs fest. Die aktuelle Positionsangabe für die Mitte des Detektionsfeldes (x), die Schichttiefe (z) und die Schichtdicke (Δz) sind im Informationsbereich 88 angezeigt. Die in FIG. 4B dargestellte Draufsicht ist über einen Tiefenbereich von 20 mm bis 80 mm gemittelt, die Schichttiefe beträgt 20 mm und die Schichtdicke 60 mm. Die Mitte des Detektionsfeldes befindet sich bei der X-Koordinate 0,96 m.

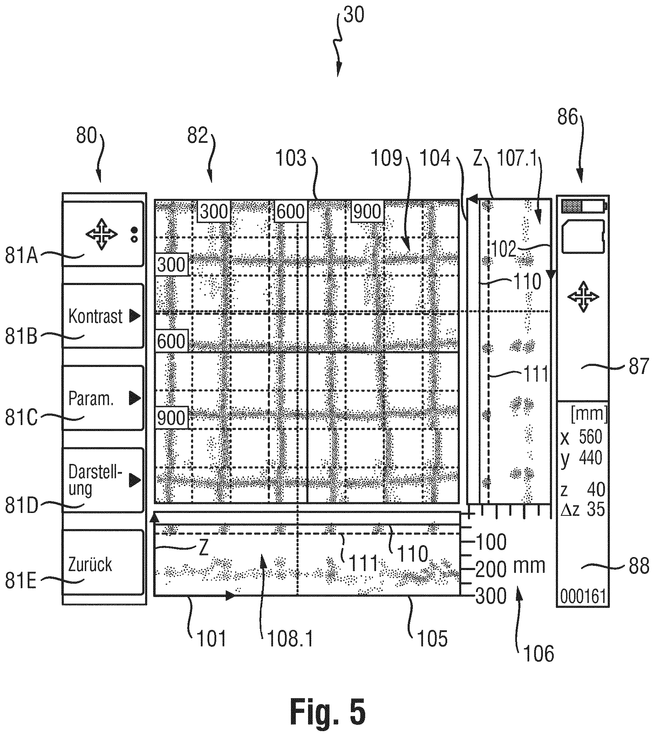

**FIG. 5** zeigt das Display 30 der Detektionsvorrichtung 21 in einem zweiten Betriebsmodus, in dem die Detektionsvorrichtung 21 in mehreren parallelen Messbahnen in einer ersten Vorschubrichtung **101** und einer zur ersten Vorschubrichtung senkrechten zweiten Vorschubrichtung **102** über den Untergrund bewegt wird. Dazu wird ein Messraster auf den Untergrund geklebt oder das Messraster wird direkt auf den Untergrund gezeichnet. Das Messraster wird benötigt, da die Messbahnen, die von der Detektionsvorrichtung 21 überfahren werden, unmittelbar aneinander angrenzen sollten.

Das zweite Hauptfeld 82 des Displays 30 ist im zweiten Betriebsmodus der Detektionsvorrichtung 21 in vier Teilbereiche unterteilt, die in Form eines Rechteckes angeordnet sind. In einem linken, oberen Teilbereich **103** ist eine Draufsicht gezeigt, in einem rechten, oberen Teilbereich **104** ein erstes Tiefenschnittbild, in einem linken, unteren Teilbereich **105** ein zweites Tiefenschnittbild und in einem rechten, unteren Teilbereich **106** eine zugehörige Messskala für das erste und zweite Tiefenschnittbild.

Das erste Tiefenschnittbild im rechten, oberen Teilbereich 104 zeigt ein Tiefenschnittbild **107.1,** das von der Tiefenrichtung Z und der zweiten Vorschubrichtung 77 aufgespannt ist. Senkrecht zur zweiten Vorschubrichtung 77, d.h. in Richtung der ersten Vorschubrichtung 75, sind weitere Tiefenschnittbilder **107.2-107.30** hinterlegt; sechs parallele Messbahnen und fünf Empfangskanäle pro Messbahn ergeben 30 Tiefenschnittbilder. Das zweite Tiefenschnittbild im linken, unteren Teilbereich 105 zeigt ein Tiefenschnittbild **108.1,** das von der Tiefenrichtung Z und der ersten Vorschubrichtung 75 aufgespannt ist. Senkrecht zur ersten Vorschubrichtung 75, d.h. in Richtung der zweiten Vorschubrichtung 77, sind weitere Tiefenschnittbilder **108.2-108.30** hinterlegt; sechs parallele Messbahnen und fünf Empfangskanäle pro Messbahn ergeben 30 Tiefenschnittbilder. Der linke, obere Teilbereich 103 zeigt eine Draufsicht **109**, die aus den ersten und/oder zweiten Tiefenschnittbildern über einen Tiefenbereich zwischen der ersten Tiefe z und der zweiten Tiefe z + Δz berechnet wurde. Die in FIG. 5 dargestellte Draufsicht 109 ist über einen Tiefenbereich von 40 mm bis 75 mm gemittelt, die Schichttiefe z beträgt 40 mm und die Schichtdicke Δz beträgt 35 mm.

In den Tiefenschnittbildern 107.1, 108.1 sind eine durchgezogene Markierungslinie **110** und eine gestrichelte Markierungslinie **111** angeordnet, die über die Schaltwippe 33 verschiebbar sind. Die durchgezogene Markierungslinie 110 legt die Schichttiefe z und die gestrichelte Markierungslinie 111 die Schichtdicke Δz des Tiefenbereichs fest. Im Informationsbereich 88 sind die aktuellen Positionsangaben für das Fadenkreuz und für die Tiefenschnittbilder in X- und Y-Richtung (x, y), die Schichttiefe (z) und die Schichtdicke (Δz) angezeigt.

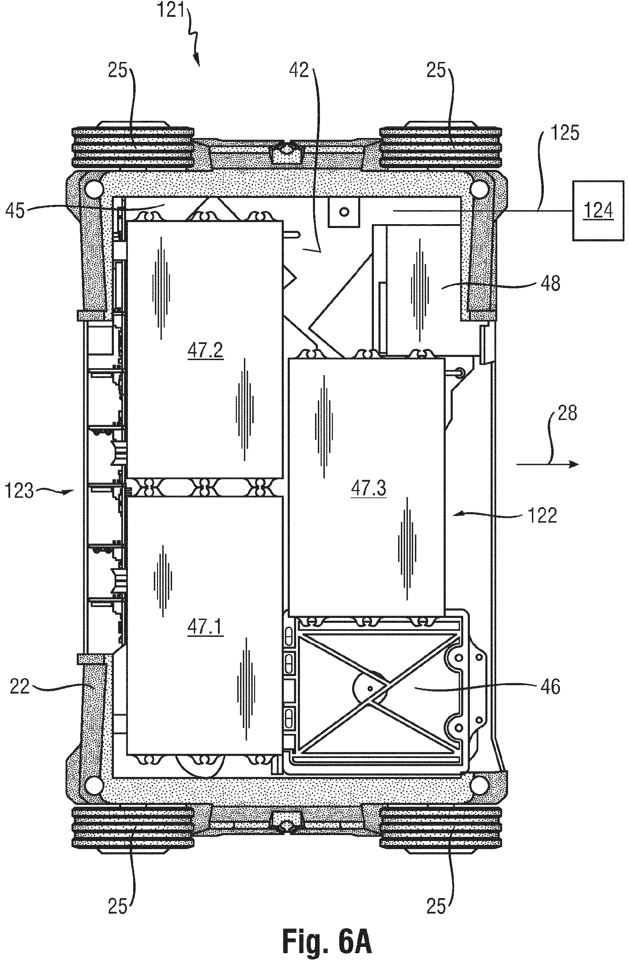

**FIG. 6A** zeigt eine weitere Ausführungsform einer erfindungsgemäßen Detektionsvorrichtung **121** in einer Ansicht von unten auf eine Radarsensoreinheit **122** und eine Stromsensoreinheit **123.** Die Radarsensoreinheit 122 ist analog zur Sensoreinheit 44 der FIG. 2B aus den drei Radarsensorelementen 47.1-47.3 aufgebaut, die verschachtelt in zwei Reihen angeordnet sind. Zwischen der ersten Reihe der Radarsensoreinheit 122 und dem Gehäuse 22 der Detektionsvorrichtung 121 ist die Stromsensoreinheit 123 angeordnet.

Um die Zuverlässigkeit beim Detektieren einer Stromleitung zu erhöhen und sicherzustellen, dass ein Empfangssignal tatsächlich durch eine im Untergrund vorhandene Stromleitung erzeugt wird, weist die Stromsensoreinheit 44 eine Modulationseinheit **124** zum Modulieren eines Stromsignals auf. Die Modulationseinheit 124 ist über eine Kommunikationsverbindung **125** mit der Steuer- und Auswerteeinheit 45 verbindbar und ist beispielsweise so ausgebildet, dass sie in eine Steckdose, die im Untergrund vorhanden ist, eingesteckt wird und an eine Phase der Stromleitung koppelt. Die Steuer- und Auswerteeinheit 45 sendet über die Kommunikationsverbindung 125 einen Steuerbefehl an die Modulationseinheit 124, die das Stromsignal mit einem vorgegebenen Muster moduliert. Zum Auswerten der Empfangssignale weist die Steuer- und Auswerteeinheit 45 ein entsprechendes Auswertemodul zum Demodulieren der Empfangssignale auf.

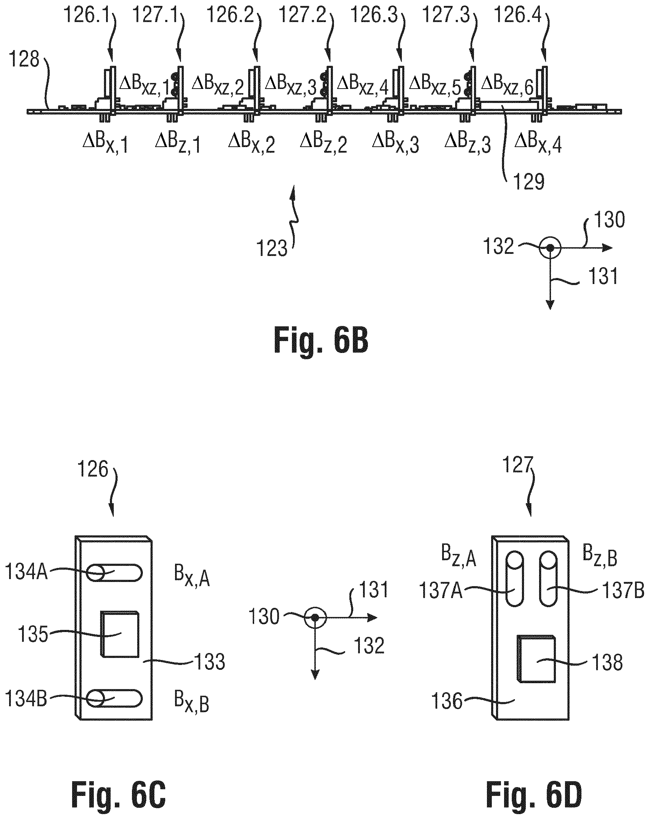

**FIG. 6B** zeigt die Stromsensoreinheit 123 der Detektionsvorrichtung 121 in einer vergrößerten Darstellung. Die Stromsensoreinheit 123 umfasst vier erste Magnetfeldsensorelemente **126.1, 126.2, 126.3, 126.4** und drei zweite Magnetfeldsensorelemente **127.1, 127.2, 127.3**, die abwechselnd auf einer Leiterplatte **128** befestigt sind. Die Leiterplatte 128 dient als Halteelement zur mechanischen Befestigung und zur elektrischen Verbindung für die ersten und zweiten Magnetfeldsensorelemente 126.1-126.4, 127.1-127.3. Auf der Leiterplatte 128 befindet sich ein Anschlusselement **129,** über das die Leiterplatte 128 mit der Steuer- und Auswerteeinheit 45 verbunden ist.

Die Magnetfeldsensorelemente 126.1-126.4, 127.1-127.3 sind an zwei zueinander senkrechten, horizontalen Richtungen **130, 131** ausgerichtet. Als Tiefenrichtung **132** ist die zu den horizontalen Richtungen 130, 131 senkrechte Richtung in den Untergrund definiert.

**FIG. 6C** zeigt das erste Magnetfeldsensorelement 126 der Stromsensoreinheit 123 im Detail. Das erste Magnetfeldsensorelement 126 umfasst ein Leiterplattenstück **133**, ein erstes Paar von Magnetfeldsensoren **134A, 134B** und einen Verstärker **135**. Die Magnetfeldsensoren 134A, 134B sind in der Ausführungsform der FIG. 6C als Spulen ausgebildet und entlang der zweiten horizontalen Richtung 131 ausgerichtet. Die Magnetfeldsensoren 134A, 134B sind parallel zueinander, in der Tiefenrichtung 132 beabstandet angeordnet und messen ein magnetisches Wechselfeld **B_{x,A}, B_{x,B}** (z.B. 50/60 Hz) in der ersten horizontalen Richtung 130.

**FIG. 6D** zeigt das zweite Magnetfeldsensorelement 127 der Stromsensoreinheit 123 im Detail. Das zweite Magnetfeldsensorelement 127 umfasst ein Leiterplattenstück **136**, ein zweites Paar von Magnetfeldsensoren **137A, 137B** und einen Verstärker **138**. Die Magnetfeldsensoren 137A, 137B sind in der Ausführungsform der FIG. 6D als Spulen ausgebildet und entlang der Tiefenrichtung 132 ausgerichtet. Die Magnetfeldsensoren 137A, 137B sind parallel zueinander, in der zweiten horizontalen Richtung 131 beabstandet angeordnet und messen ein magnetisches Wechselfeld **B_{z,A}, B_{z,B}** (z.B. 50/60 Hz) in der Tiefenrichtung 132.

Um bei der Detektion ein homogenes magnetisches Gleichfeld (homogenes Wechselfeld) zu eliminieren, wird zwischen den Magnetfeldsensoren 134A, 134B des ersten Paares ein Differenzwert Δ**B**ₓ und zwischen den Magnetfeldsensoren 137A, 137B des zweiten Paares ein Differenzwert Δ**B**_{z} berechnet. Durch die Differenzbildung werden homogene magnetische Gleichfelder eliminiert. Aus den Differenzwerten ΔB_{z}, ΔB_{z} der benachbarten ersten und zweiten Paare von Magnetfeldsensoren wird ein mittlerer Betrag Δ**B**_{xz} = sqrt[(ΔBₓ)² + (ΔB_{z})²] berechnet. Die in FIG. 6B gezeigte Stromsensoreinheit 123 mit vier ersten Magnetfeldsensorelementen 126.1-126.4 und drei zweiten Magnetfeldsensorelementen 127.1-127.3 liefert sechs Messwerte Δ**B**_{xz,1} - Δ**B**_{xz,6}, die sechs verschiedenen X-Koordinaten entlang der ersten horizontalen Richtung 130 zugeordnet werden. Aus den Messwerten ΔB_{xz,1} - ΔB_{xz,6} kann die Steuer- und Auswerteeinheit 46 den Verlauf der Stromleitung im Untergrund ermitteln und eine horizontale Darstellung (XY-Darstellung) des Untergrundes mit der Stromleitung an die Anzeigeeinheit 26 übermitteln.

Bei der Detektionsvorrichtung 121 der FIG. 6A mit der ersten und zweiten Sensoreinheit 122, 123 sind die ersten und zweiten Magnetfeldsensorelemente 126.1-126.4, 127.1-127.3 abwechselnd entlang der ersten horizontalen Richtung 130 angeordnet und erfassen in der ersten horizontalen Richtung 130 einen Messbereich, der dem Detektionsfeld der ersten Sensoreinheit 122 entspricht. Die Messergebnisse der ersten und zweiten Sensoreinheit 122, 123 können als getrennte Messaufnahmen oder in einer gemeinsamen Messaufnahme auf der Anzeigeeinheit 26 dargestellt werden.

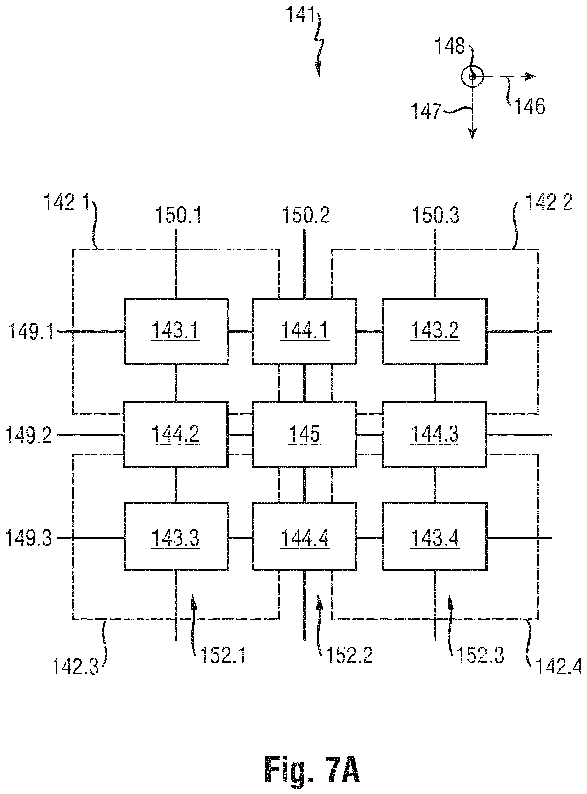

**FIG. 7A** zeigt eine erste Ausführungsform einer Sensoreinheit **141** mit vier Sensorelementen **142.1-142.4**, die regelmässig in zwei Reihen und zwei Spalten in einer rechteckigen Anordnung angeordnet sind. Jedes Sensorelement 142.1-142.4 arbeitet im Sendemodus als Sendeelement und im Empfangsmodus als Empfangselement. Wenn die vier Sensorelemente 142.1-142.4 wie beschrieben von der Steuer- und Auswerteeinheit 45 so gesteuert werden, dass jeweils ein Sensorelement sendet und alle Sensorelemente empfangen und dieser Vorgang für alle Sensorelemente durchgeführt wird, ergibt sich ein Empfangsfeld mit neun Empfangsbereichen.

Die neun Empfangsbereiche lassen sich in drei Kategorien von Empfangsbereichen einteilen. Jedem Sensorelement ist ein monostatischer Empfangsbereich **143.1-143.4**, der jeweils das monostatische Empfangssignal darstellt, direkt zugeordnet; es ergeben sich vier monostatische Empfangsbereiche. Zwischen zwei, in einer Reihe oder einer Spalte benachbarten Sensorelementen befindet sich jeweils ein Empfangsbereich **144.1-144.4**, in dem ein gemitteltes Signal der beiden bistatischen Empfangssignale dargestellt wird; bei vier Sensorelementen 142.1-142.4 entstehen auf diese Weise vier Empfangsbereiche. Zwischen vier, rechteckig zueinander angeordneten Sensorelementen entsteht im Bereich des Mittelpunktes ein weiterer Empfangsbereich **145**, in dem ein gemitteltes Signal der vier bistatischen Empfangssignale dargestellt wird; bei vier Sensorelementen 142.1-142.4 entsteht auf diese Weise ein weiterer Empfangsbereich. Der Begriff "gemitteltes Signal" bedeutet, dass zwischen den Empfangssignalen ein Mittelwert gebildet wird, wobei die beiden Empfangssignale gleich oder auch unterschiedlich stark gewichtet werden können.

Die Sensoreinheit 141 eignet sich zum Einsatz in einer gehaltenen Detektionsvorrichtung. Die Sensorelemente 142.1-142.4 sind in senkrechten Reihen und Spalten entlang einer ersten horizontalen Richtung **146** und entlang einer zweiten horizontalen Richtung **147** angeordnet; als Tiefenrichtung **148** ist die zu den horizontalen Richtungen 146, 147 senkrechte Richtung in den Untergrund definiert. Aus den monostatischen und bistatischen Empfangssignalen lassen sich in der ersten und zweiten Richtung 146, 147 Tiefenschnittbilder berechnen, die in FIG. 7A schematisch dargestellt sind. Neben den Tiefenschnittbildern wird eine Draufsicht berechnet, die aus den Tiefenschnittbildern in der ersten oder zweiten horizontalen Richtung 146, 147 oder aus den neun Empfangsbereichen über einen Tiefenbereich zwischen einer ersten und zweiten Tiefe berechnet wird.

Die Tiefenschnittbilder in der ersten horizontalen Richtung 145 werden von der Tiefenrichtung 148 als vertikaler Achse und der ersten horizontalen Richtung 145 als horizontaler Achse aufgespannt. In der ersten horizontalen Richtung 145 wird aus den drei Empfangsbereichen 143.1, 144.1, 143.2 ein erstes Tiefenschnittbild **149.1**, aus den drei Empfangsbereichen 144.2, 145, 144.3 ein zweites Tiefenschnittbild **149.2** und aus den drei Empfangsbereichen 143.3, 144.4, 143.4 ein drittes Tiefenschnittbild **149.3** berechnet. Die Tiefenschnittbilder in der zweiten horizontalen Richtung 146 werden von der Tiefenrichtung 148 als vertikaler Achse und der zweiten horizontalen Richtung 146 als horizontaler Achse aufgespannt. In der zweiten horizontalen Richtung 146 wird aus den drei Empfangsbereichen 143.1, 144.2, 143.3 ein erstes Tiefenschnittbild **150.1**, aus den drei Empfangsbereichen 144.1, 145, 144.4 ein zweites Tiefenschnittbild **150.2** und aus den drei Empfangsbereichen 143.2, 144.3, 143.4 ein drittes Tiefenschnittbild **150.3** berechnet.

Die drei Empfangsbereiche 143.1, 144.1, 143.2 bilden einen ersten horizontalen Empfangskanal **151.1**, die drei Empfangsbereiche 144.2, 145, 144.3 einen zweiten horizontalen Empfangskanal **151.2** und die drei Empfangsbereiche 143.3, 144.4, 143.4 einen dritten horizontalen Empfangskanal **151.3.** Die drei Empfangsbereiche 143.1, 144.2, 143.3 bilden einen ersten vertikalen Empfangskanal **152.1**, die drei Empfangsbereiche 144.1, 145, 144.4 einen zweiten vertikalen Empfangskanal **152.2** und die drei Empfangsbereiche 143.2, 144.3, 143.4 einen dritten vertikalen Empfangskanal **152.3.**

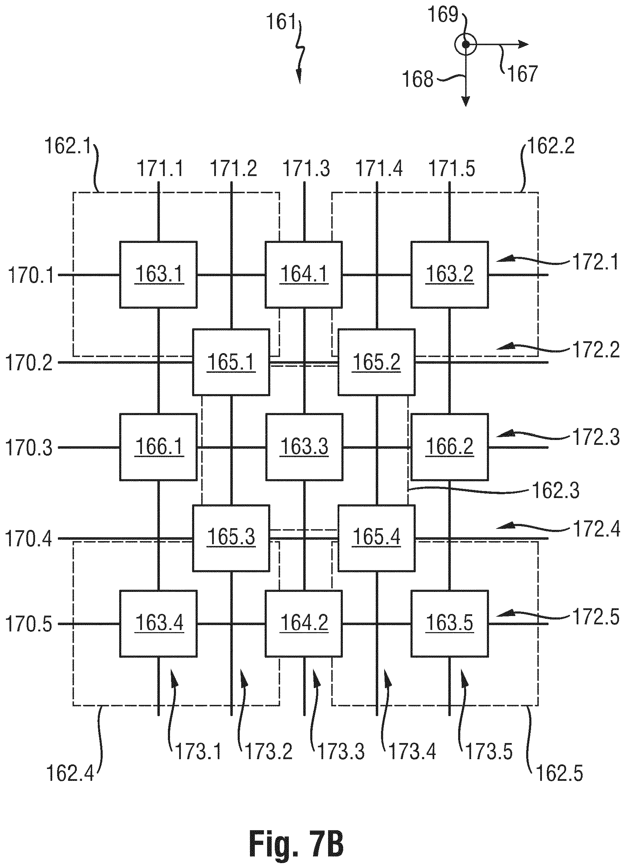

**FIG. 7B** zeigt eine zweite Ausführungsform einer Sensoreinheit **161** mit fünf Sensorelementen **162.1-162.5** in einer verschachtelten Anordnung. Jedes Sensorelement 162.1-162.5 arbeitet im Sendemodus als Sendeelement und im Empfangsmodus als Empfangselement. Die fünf Sensorelemente 162.1-162.5 ergeben ein Empfangsfeld mit 13 Empfangsbereichen.

Die Empfangsbereiche lassen sich in vier Kategorien von Empfangsbereichen einteilen. Jedem Sensorelement 162.1-162.5 ist ein monostatischer Empfangsbereich **163.1-163.5**, der das jeweilige monostatische Empfangssignal darstellt, zugeordnet; es ergeben sich fünf monostatische Empfangsbereiche 163.1-163.5. Zwischen zwei, in einer Reihe benachbarten Sensorelementen befindet sich jeweils ein Empfangsbereich **164.1, 164.2**, in dem ein gemitteltes Signal der beiden bistatischen Empfangssignale dargestellt wird; bei fünf Sensorelementen 162.1-162.5 entstehen auf diese Weise zwei Empfangsbereiche 164.1, 164.2. Zwischen zwei, in einer Diagonalen angeordneten Sensorelementen befindet sich jeweils ein Empfangsbereich **165.1-165.4**, in dem ein gemitteltes Signal der beiden bistatischen Empfangssignale dargestellt wird; bei fünf Sensorelementen 162.1-162.5 entstehen auf diese Weise vier Empfangsbereiche. Zwischen zwei Sensorelementen, die in Reihen mit der gleichen Anordnung angeordnet sind, befindet sich jeweils ein Empfangsbereich **166.1, 166.2**, in dem ein gemitteltes Signal der beiden bistatischen Empfangssignale dargestellt wird; bei fünf Sensorelementen 162.1-162.5 entstehen auf diese Weise zwei Empfangsbereiche 166.1, 166.2.

Die Sensoreinheit 161 eignet sich unter anderem zum Einsatz in einer gehaltenen Detektionsvorrichtung. Die Sensorelemente 162.1-162.5 sind entlang einer ersten horizontalen Richtung **167** und entlang einer zweiten horizontalen Richtung **168** angeordnet; als Tiefenrichtung **169** ist die zu den horizontalen Richtungen 167, 168 senkrechte Richtung in den Untergrund definiert. Aus den Empfangssignalen lassen sich in der ersten und zweiten horizontalen Richtung 167, 168 Tiefenschnittbilder berechnen, die in FIG. 7B schematisch dargestellt sind. Neben den Tiefenschnittbildern wird eine Draufsicht berechnet, die aus den Tiefenschnittbildern in der ersten oder zweiten horizontalen Richtung 167, 168 oder aus den 13 Empfangsbereichen über einen Tiefenbereich zwischen einer ersten und zweiten Tiefe berechnet wird.

Die Tiefenschnittbilder in der ersten horizontalen Richtung 167 werden von der Tiefenrichtung 169 als vertikaler Achse und der ersten horizontalen Richtung 167 als horizontaler Achse aufgespannt. In der ersten horizontalen Richtung 167 wird aus den drei Empfangsbereichen 163.1, 164.1, 163.2 ein erstes Tiefenschnittbild **170.1**, aus den zwei Empfangsbereichen 165.1, 165.2 ein zweites Tiefenschnittbild **170.2**, aus den drei Empfangsbereichen 166.1, 163.2, 166.2 ein drittes Tiefenschnittbild **170.3**, aus den zwei Empfangsbereichen 165.3, 165.4 ein viertes Tiefenschnittbild **170.4** und aus den drei Empfangsbereichen 163.3, 164.2, 163.5 ein fünftes Tiefenschnittbild **170.5** berechnet.

Die Tiefenschnittbilder in der zweiten horizontalen Richtung 168 werden von der Tiefenrichtung 169 als vertikaler Achse und der zweiten horizontalen Richtung 168 als horizontaler Achse aufgespannt. In der zweiten horizontalen Richtung 168 wird aus den drei Empfangsbereichen 163.1, 166.1, 163.4 ein erstes Tiefenschnittbild **171.1**, aus den zwei Empfangsbereichen 165.1, 165.3 ein zweites Tiefenschnittbild **171.2**, aus den drei Empfangsbereichen 164.1, 163.3, 164.2 ein drittes Tiefenschnittbild **171.3**, aus den zwei Empfangsbereichen 165.2, 165.4 ein viertes Tiefenschnittbild **171.4** und aus den drei Empfangsbereichen 163.2, 166.2, 163.5 ein fünftes Tiefenschnittbild **171.5** berechnet.

Die drei Empfangsbereiche 163.1, 164.1, 163.2 bilden einen ersten horizontalen Empfangskanal **172.1**, die zwei Empfangsbereiche 165.1, 165.2 einen zweiten horizontalen Empfangskanal **172.2**, die drei Empfangsbereiche 166.1, 163.2, 166.2 einen dritten horizontalen Empfangskanal **172.3**, die zwei Empfangsbereiche 165.3, 165.4 einen vierten horizontalen Empfangskanal **172.4** und die drei Empfangsbereiche 163.3, 164.2, 163.5 einen fünften horizontalen Empfangskanal **172.5.** Die drei Empfangsbereiche 163.1, 166.1, 163.4 bilden einen ersten vertikalen Empfangskanal **173.1**, die zwei Empfangsbereiche 165.1, 165.3 einen zweiten vertikalen Empfangskanal **173.2**, die drei Empfangsbereiche 164.1, 163.3, 164.2 einen dritten vertikalen Empfangskanal **173.3**, die zwei Empfangsbereiche 165.2, 165.4 einen vierten vertikalen Empfangskanal **173.4** und die drei Empfangsbereiche 163.2, 166.2, 163.5 einen fünften vertikalen Empfangskanal **173.5.**

Die Sensoreinheiten 141, 161 können neben einer gehaltenen Detektionsvorrichtung auch in einer geführten Detektionsvorrichtung eingesetzt werden. Bei einer geführten Detektionsvorrichtung, die entlang einer beliebigen Bahn bewegt wird, werden vom Gerätehersteller zwei senkrechte Richtungen in der XY-Ebene definiert, beispielsweise Richtungen, die durch die Anordnungen der Sensorelemente bevorzugt sind. Die von den Sensorelementen erfassten Empfangssignale werden in der XY-Ebene den mit einer Koordinatenerfassungseinheit erfassten X- und Y-Koordinaten zugeordnet. Die Tiefenschnittbilder werden entlang der beiden senkrechten Richtungen berechnet. Aus den Tiefenschnittbildern oder direkt aus den Empfangssignalen wird eine Draufsicht bestimmt.

Die Sensoreinheiten 141, 161 sind in FIG. 7A, B als Ausführungsformen einer Sensoreinheit für eine gehaltene Detektionsvorrichtung vorgestellt worden. Aufgrund der symmetrischen Anordnung der Sensorelemente eignen sich die Sensoreinheiten 141, 161 insbesondere auch für eine geführte Detektionsvorrichtung mit einer beliebigen Vorschubbewegung. Da bei einer beliebigen Vorschubbewegung keine Richtung bevorzugt ist, sollte die Anzahl an Sende- und Empfangselementen in beiden Richtungen gleich sein, um eine vergleichbare Ortsauflösung zu erzielen.

Um die Genauigkeit der Messung zu erhöhen, kann die Detektionsvorrichtung 21 mehrfach über den zu detektierenden Untergrund hin- und herbewegt werden. Dazu ist eine symmetrische Anordnung der Sende- und Empfangselemente erforderlich, was bei den Sensoreinheiten 141, 161 gegeben ist.

## Patentansprüche

1. Vorrichtung (1; 21; 121) zum Detektieren eines Objektes (8, 11, 12.1-12.3) in einem Untergrund (3, 6) aufweisend
eine Sendeeinheit (54; 141; 161) mit einem ersten Sendeelement (53.1), das zum Aussenden eines ersten Sendesignals (TX₁) in den Untergrund (3, 6) ausgebildet ist,
eine Empfangseinheit (56; 161) mit einem ersten, zweiten und dritten Empfangselement (55.1-55.3; 162.1-162.3), die zum Empfangen eines von dem ersten Sendesignal (TX₁) und den Eigenschaften des Objektes (8, 11, 12.1-12.3) und des Untergrundes (3, 6) abhängigen Empfangssignals (TX₁/RX₁, TX₁/RX₂, TX₁/RX₃) ausgebildet sind,
eine Steuer- und Auswerteeinheit (45), die zum Steuern der Sende- und Empfangseinheiten (54, 56) und zum Auswerten der Empfangssignale (TX₁/RX₁, TX₁/RX₂, TX₁/RX₃) ausgebildet ist, und
eine Anzeigeeinheit (26), die zur Anzeige der von der Steuer- und Auswerteeinheit (45) ausgewerteten Empfangssignale (TX₁/RX₁, TX₁/RX₂, TX₁/RX₃) ausgebildet ist,
wobei die Sendeeinheit (54; 141; 161) ein zweites Sendeelement (53.2), das zum Aussenden eines zweiten Sendesignals (TX₂) in den Untergrund (3, 6) ausgebildet ist, und ein drittes Sendeelement (53.3), das zum Aussenden eines dritten Sendesignals (TX₃) in den Untergrund (3, 6) ausgebildet ist, aufweist, wobei das erste, zweite und dritte Sendeelement (53.1-53.3) der Sendeeinheit (54; 161) von der Steuer- und Auswerteeinheit (45) unabhängig voneinander steuerbar sind,
wobei das erste Sendeelement (53.1) der Sendeeinheit (54) und das erste Empfangselement (55.1) der Empfangseinheit (56) als ein erstes Sensorelement (47.1; 162.1), das zweite Sendeelement (53.2) der Sendeeinheit (54) und das zweite Empfangselement (55.2) der Empfangseinheit (56) als ein zweites Sensorelement (47.2; 162.2) und das dritte Sendeelement (53.3) der Sendeeinheit (54) und das dritte Empfangselement (55.3) der Empfangseinheit (56) als ein drittes Sensorelement (47.3; 162.3) in eine erste Sensoreinheit (44; 122; 162) integriert sind und wobei die Sensorelemente (47.1, 47.2, 47.3; 162.1, 162.2, 162.3) mittels der Steuer- und Auswerteeinheit (45) zwischen einem Sendemodus, in dem ein Sensorelement (47.1-47.3; 162.1-162.3) ein Sendesignal (TX_{1,} TX₂, TX₃) aussendet, und einem Empfangsmodus, in dem ein Sensorelement (47.1-47.3; 162.1-162.3) ein Empfangssignal (TX₁/RX₁, TX₁/RX₂, TX₁/RX₃, TX₂/RX₁, TX₂/RX₂, TX₂/RX₃, TX₃/RX₁, TX₃/RX₂, TX₃/RX₃) empfängt, schaltbar sind,
**dadurch gekennzeichnet, dass** das erste, zweite und dritte Sensorelement (47.1, 47.2, 47.3; 162.1, 162.2, 162.3) in einer verschachtelten Anordnung in einer ersten und zweiten Reihe angeordnet sind, wobei das Sensorelement (47.3; 162.3) der zweiten Reihe zwischen den Sensorelementen (47.1, 47.2; 162.1, 162.2) der ersten Reihe angeordnet ist.

2. Vorrichtung nach Anspruch 1, **dadurch gekennzeichnet, dass** das erste, zweite und dritte Sendeelement (53.1-53.3) der Sendeeinheit (54) ausgebildet sind, Sendesignale (TX_{1,P1}, TX_{2,P1}, TX_{3,P1}) mit einer ersten Polarisationsrichtung (P1) und Sendesignale (TX_{1,P2}, TX_{2,P2}, TX_{3,P2}) mit einer zweiten Polarisationsrichtung (P2) auszusenden, wobei die zweite Polarisationsrichtung (P2) von der ersten Polarisationsrichtung (P1) verschieden ist.

3. Vorrichtung nach Anspruch 2, **dadurch gekennzeichnet, dass** das erste, zweite und dritte Empfangselement (55.1-55.3) der Empfangseinheit (56) ausgebildet sind, gleichzeitig ein erstes Empfangssignal (TX_{1,P1}/RX_{1,P1}, TX_{1,P2}/RX_{1,P1}, TX_{1,P1}/RX_{2,P1}, TX_{1,P2}/RX_{2,P1}, TX_{1,P1}/RX_{3,P1}, TX_{1,P2}/RX_{3,P1}, TX_{2,P1}/RX_{1,P1}, TX_{2,P2}/RX_{1,P1}, TX_{2,P1}/RX_{2,P1}, TX_{2,P2}/RX_{2,P1}, TX_{2,P1}/RX_{3,P1}, TX_{2,P2}/RX_{3,P1}, TX_{3,P1}/RX_{1,P1}, TX_{3,P2}/RX_{1,P1}, TX_{3,P1}/RX_{2,P1}, TX_{3,P2}/RX_{2,P1}, TX_{3,P1}/RX_{3,P1}, TX_{3,P2}/RX_{3,P1}) in der ersten Polarisationsrichtung (P1) und ein zweites Empfangssignal (TX_{1,P1}/RX_{1,P2}, TX_{1,P2}/RX_{1,P2}, TX_{1,P1}/RX_{2,P2}, TX_{1,P2}/RX_{2,P2}, TX_{1,P1}/RX_{3,P2}, TX_{1,P2}/RX_{3,P2}, TX_{2,P1}/RX_{1,P2}, TX_{2,P2}/RX_{1,P2}, TX_{2,P1}/RX_{2,P2}, TX_{2,P2}/RX_{2,P2}, TX_{2,P1}/RX_{3,P2}, TX_{2,P2}/RX_{3,P2}, TX_{3,P1}/RX_{1,P2}, TX_{3,P2}/RX_{1,P2}, TX_{3,P1}/RX_{2,P2}, TX_{3,P2}/RX_{2,P2}, TX_{3,P1}/RX_{3,P2}, TX_{3,P2}/RX_{3,P2}) in der zweiten Polarisationsrichtung (P2) zu empfangen.

4. Vorrichtung nach einem der Ansprüche 1 bis 3, **dadurch gekennzeichnet, dass** die Steuer- und Auswerteeinheit (45) einen Speicher (66) mit einem Stapelspeicher (67.1, 67.2, 67.3) und einem Hauptspeicher (68) aufweist.

5. Vorrichtung nach einem der Ansprüche 1 bis 4, **dadurch gekennzeichnet, dass** eine zweite Sensoreinheit (123) mit Sensorelementen (126.1-126.4, 127.1-127.3) vorgesehen ist, wobei sich die Sensorelemente (126.1-126.4, 127.1-127.3) der zweiten Sensoreinheit (123) in mindestens einer Sensoreigenschaft von den Sensorelementen (47.1, 47. 2, 47.3) der ersten Sensoreinheit (122) unterscheiden.

6. Vorrichtung nach Anspruch 5, **dadurch gekennzeichnet, dass** in einem ersten Anzeigemodus die Messergebnisse der ersten Sensoreinheit (122), in einem zweiten Anzeigemodus die Messergebnisse der zweiten Sensoreinheit (123) und in einem dritten Anzeigemodus die Messergebnisse der ersten und zweiten Sensoreinheit (122, 123) auf der Anzeigeeinheit (26) darstellbar sind.

7. Vorrichtung nach einem der Ansprüche 5 bis 6, **dadurch gekennzeichnet, dass** die zweite Sensoreinheit (123) als Stromsensoreinheit zum Detektieren einer Stromleitung (11, 12.1-12.3) ausgebildet ist.

8. Vorrichtung nach Anspruch 7, **dadurch gekennzeichnet, dass** die zweite Sensoreinheit (123) erste und zweite Magnetfeldsensorelemente (126.1-126.4, 127.1-127.3) aufweist, wobei die ersten Magnetfeldsensorelemente (126.1-126.4) ein Magnetfeld oder einen Magnetfeldgradienten in einer ersten Richtung (130) und die zweiten Magnetfeldsensorelemente (127.1-127.3) ein Magnetfeld oder einen Magnetfeldgradienten in einer von der ersten Richtung (130) verschiedenen, zweiten Richtung (132) erfassen.

9. Vorrichtung nach Anspruch 8, **dadurch gekennzeichnet, dass** die zweite Sensoreinheit (123) dritte Magnetfeldsensorelemente aufweist, wobei die dritten Magnetfeldsensorelemente ein Magnetfeld oder einen Magnetfeldgradienten in einer von der ersten und zweiten Richtung (130, 132) verschiedenen dritten Richtung (131) erfassen.

10. Vorrichtung nach Anspruch 7, **dadurch gekennzeichnet, dass** die zweite Sensoreinheit (123) Magnetfeldsensorelemente aufweist, die ein Magnetfeld oder einen Magnetfeldgradienten in einer ersten Richtung (130) und in einer, von der ersten Richtung (130) verschiedenen, zweiten Richtung (132) erfassen.

11. Vorrichtung nach Anspruch 10, **dadurch gekennzeichnet, dass** die Magnetfeldsensorelemente ein Magnetfeld oder einen Magnetfeldgradienten in einer von der ersten und zweiten Richtung (130, 132) verschiedenen dritten Richtung (131) erfassen.

12. Vorrichtung nach einem der Ansprüche 7 bis 11, **dadurch gekennzeichnet, dass** die zweite Sensoreinheit (123) eine Modulationseinheit (124) aufweist, die mit der Steuer- und Auswerteeinheit (45) über eine Kommunikationsverbindung (125) steuerbar verbindbar ist und die auf einen Steuerbefehl der Steuer- und Auswerteeinheit (45) ein Stromsignal der Stromleitung (11, 12.1-12.3) moduliert.

13. Vorrichtung nach Anspruch 12, **dadurch gekennzeichnet, dass** die Steuer- und Auswerteeinheit (45) ein Auswertemodul zum Demodulieren der Empfangssignale aufweist.

14. Vorrichtung nach einem der Ansprüche 1 bis 13, **dadurch gekennzeichnet, dass** die Steuer- und Auswerteeinheit (45) ausgebildet ist, aus den Empfangssignalen (74.1-74.5) der Empfangselemente (55.1-55.3) der Empfangseinheit (56) mehrere Tiefenschnittbilder (89.1-89.5; 107.1-107.30, 108.1-108.30) zu berechnen.

15. Vorrichtung nach Anspruch 14, **dadurch gekennzeichnet, dass** die Steuer- und Auswerteeinheit (45) ausgebildet ist, aus den Tiefenschnittbildern (89.1-89.5; 107.1-107.30, 108.1-108.30) eine Draufsicht (90; 109) als Mittelwert, Median, Maximalwert oder gewichtete Summe über einen Tiefenbereich zwischen einer ersten Tiefe (z) und einer zweiten Tiefe (z + Δz) zu berechnen und auf der Anzeigeeinheit (26) darzustellen.

16. Vorrichtung nach Anspruch 15, **dadurch gekennzeichnet, dass** die erste Tiefe (z) und die zweite Tiefe (z + Δz) verstellbar ausgebildet sind.

17. Verfahren zum Detektieren eines Objektes (8, 11, 12.1-12.3) in einem Untergrund (3, 6), mittels einer Vorrichtung nach einem der vorherigen Ansprüche, aufweisend die Schritte:
Aussenden eines ersten Sendesignals (TX₁) durch ein erstes Sendeelement (53.1; 142.1; 162.1) einer Sendeeinheit (54; 141; 161) einer ersten Sensoreinheit in den Untergrund (3, 6),
Empfangen eines von dem ersten Sendesignal (TX₁) und den Eigenschaften des Objektes (8, 11, 12.1-12.3) und des Untergrundes (3, 6) abhängigen Empfangssignals (TX₁/RX₁, TX₁/RX₂, TX₁/RX₃) durch jedes Empfangselement (55.1-55.3; 142.1-142.4; 162.1-162.5) einer Empfangseinheit (56; 141; 161) der ersten Sensoreinheit, Aussenden eines zweiten Sendesignals (TX₂) in den Untergrund (3, 6) durch ein zweites Sendeelement (53.2; 142.2; 162.2) der Sendeeinheit (54; 141; 161),
Empfangen eines von dem zweiten Sendesignal (TX₂) und den Eigenschaften des Objektes (8, 11, 12.1-12.3) und des Untergrundes (3, 6) abhängigen Empfangssignals (TX₂/RX₁, TX₂/RX₂, TX₂/RX₃) durch jedes Empfangselement (55.1-55.3; 142.1-142.4; 162.1-162.5) der Empfangseinheit (56; 141; 161),
**dadurch gekennzeichnet, dass** aus den Empfangssignalen von einer Steuer- und Auswerteeinheit (45) mehrere Tiefenschnittbilder (89.1-89.5; 107.1-107.30, 108.1-108.30; 149.1-149.3, 150.1-150.3; 170.1-170.5, 171.1-171.5) berechnet werden, wobei die Tiefenschnittbilder eine zweidimensionale Darstellung in einer Tiefenrichtung (Z) des Untergrundes (3, 6) und einer zur Tiefenrichtung (Z) senkrechten horizontalen Richtung (X, Y) ist, und aus den Tiefenschnittbildern (89.1-89.5; 107.1-107.30, 108.1-108.30) eine Draufsicht (90; 109) berechnet und auf einer Anzeigeeinheit (26) angezeigt wird, wobei die Draufsicht (90; 109) als Mittelwert, Median, Maximalwert oder gewichtete Summe über einen Tiefenbereich zwischen einer ersten Tiefe (z) und einer zweiten Tiefe (z + Δz) berechnet wird.

18. Verfahren nach Anspruch 17, **dadurch gekennzeichnet, dass** durch ein drittes Sendeelement (53.3; 142.3; 162.3) der Sendeeinheit (54; 141; 161) eines drittes Sendesignal (TX₃) in den Untergrund (3, 6) ausgesandt wird und durch jedes Empfangselement (55.1-55.3; 142.1-142.4; 162.1-162.5) der Empfangseinheit (56; 141; 161) ein von dem dritten Sendesignal (TX₃) und den Eigenschaften des Objektes (8, 11, 12.1-12.3) und des Untergrundes (3, 6) abhängigen Empfangssignals (TX₃/RX₁, TX₃/RX₂, TX₃/RX₃) empfangen wird, wobei von jedem Sendeelement (53.1-53.3; 142.1-142.4; 162.1-162.5) der Sendeeinheit (54; 141; 161) nacheinander ein Sendesignal (TX_{1,} TX₂, TX₃) ausgesandt wird und von allen Empfangselementen (55.1-55.3; 142.1-142.4; 162.1-162.5) der Empfangseinheit (56; 141; 161) zu jedem Sendesignal (TX_{1,} TX₂, TX₃) gleichzeitig ein Empfangssignal (TX₁/RX₁, TX₁/RX₂, TX₁/RX₃, TX₂/RX₁, TX₂/RX₂, TX₂/RX₃, TX₃/RX₁, TX₃/RX₂, TX₃/RX₃) empfangen wird.

19. Verfahren nach Anspruch 18, **dadurch gekennzeichnet, dass** von den Sendeelementen (53.1-53.3) der Sendeeinheit (54) jeweils in einem ersten Schritt ein Sendesignal (TX_{1,P1}, TX_{2,P1}, TX_{3,P1}) mit einer ersten Polarisationsrichtung (P1) und in einem zweiten Schritt ein Sendesignal (TX_{1,P2}, TX_{2,P2}, TX_{3,P2}) mit einer zweiten Polarisationsrichtung (P2), die von der ersten Polarisationsrichtung (P1) verschieden ist, ausgesandt wird.

20. Verfahren nach Anspruch 19, **dadurch gekennzeichnet, dass** von den Empfangselementen (55.1-55.3) der Empfangseinheit (56) gleichzeitig ein erstes Empfangssignal (TX_{1,P1}/RX_{1,P1}, TX_{1,P2}/RX_{1,P1}, TX_{1,P1}/RX_{2,P1}, TX_{1,P2}/RX_{2,P1}, TX_{1,P1}/RX_{3,P1}, TX_{1,P2}/RX_{3,P1}, TX_{2,P1}/RX_{1,P1}, TX_{2,P2}/RX_{1,P1}, TX_{2,P1}/RX_{2,P1}, TX_{2,P2}/RX_{2,P1}, TX_{2,P1}/RX_{3,P1}, TX_{2,P2}/RX_{3,P1}, TX_{3,P1}/RX_{1,P1}, TX_{3,P2}/RX_{1,P1}, TX_{3,P1}/RX_{2,P1}, TX_{3,P2}/RX_{2,P1}, TX_{3,P1}/RX_{3,P1}, TX_{3,P2}/RX_{3,P1}) in der ersten Polarisationsrichtung (P1) und ein zweites Empfangssignal (TX_{1,P1}/RX_{1,P2}, TX_{1,P2}/RX_{1,P2}, TX_{1,P1}/RX_{2,P2}, TX_{1,P2}/RX_{2,P2}, TX_{1,P1}/RX_{3,P2}, TX_{1,P2}/RX_{3,P2}, TX_{2,P1}/RX_{1,P2}, TX_{2,P2}/RX_{1,P2}, TX_{2,P1}/RX_{2,P2}, TX_{2,P2}/RX_{2,P2}, TX_{2,P1}/RX_{3,P2}, TX_{2,P2}/RX_{3,P2}, TX_{3,P1}/RX_{1,P2}, TX_{3,P2}/RX_{1,P2}, TX_{3,P1}/RX_{2,P2}, TX_{3,P2}/RX_{2,P2}, TX_{3,P1}/RX_{3,P2}, TX_{3,P2}/RX_{3,P2}) in der zweiten Polarisationsrichtung (P2) empfangen wird.

21. Verfahren nach einem der Ansprüche 17 bis 20, **dadurch gekennzeichnet, dass** die Empfangssignale in einem Stapelspeicher (67.1, 67.2, 67.3) digital gemittelt werden, bevor sie an einen Hauptspeicher (68) einer Steuer- und Auswerteeinheit (45) übermittelt werden.

22. Verfahren nach einem der Ansprüche 17 bis 21, **dadurch gekennzeichnet, dass** ein erster Magnetfeldgradient (ΔBₓ) in einer ersten Richtung (130) und ein zweiter Magnetfeldgradient (ΔB_{z}) in einer zweiten Richtung (132) von einer zweiten Sensoreinheit (123) erfasst werden.

23. Verfahren nach Anspruch 22, **dadurch gekennzeichnet, dass** die erste Sensoreinheit (122) in einer Vorschubrichtung (28) über den Untergrund (6) bewegt wird, der erste Magnetfeldgradient (ΔBₓ) in einer zur Vorschubrichtung (28) senkrechten horizontalen Richtung (130) erfasst wird und der zweite Magnetfeldgradient (ΔB_{z}) in einer zur Vorschubrichtung (28) und zur ersten horizontalen Richtung (130) senkrechten Tiefenrichtung (132) erfasst wird.

24. Verfahren nach Anspruch 23, **dadurch gekennzeichnet, dass** erste und zweite Magnetfeldsensorelemente (126.1-126.4, 127.1-127.3) in der horizontalen Richtung (130) abwechselnd angeordnet werden und aus dem ersten Magnetfeldgradienten (ΔBₓ) und dem zweiten Magnetfeldgradienten (ΔB_{z}) von benachbarten ersten und zweiten Magnetfeldsensorelementen (126.1-126.4, 127.1-127.3) jeweils ein mittlerer Betrag ΔB_{xz} = sqrt[(ΔBₓ)² + (ΔB_{z})²] berechnet wird.

25. Verfahren nach Anspruch 24, **dadurch gekennzeichnet, dass** aus den mittleren Beträgen (ΔB_{xz,1} - ΔB_{xz,6}) der benachbarten ersten und zweiten Magnetfeldsensorelemente (126.1-126.4, 127.1-127.3) ein horizontale Darstellung von der Steuer- und Auswerteeinheit (45) berechnet wird und die horizontale Darstellung von der Steuer- und Auswerteeinheit (45) an eine Anzeigeeinheit (26) übertragen und auf der Anzeigeeinheit (26) dargestellt wird.

## Claims

1. Apparatus (1; 21; 121) for detecting an object (8, 11, 12.1-12.3) in a substrate (3, 6) having
a transmitting unit (54; 141; 161) with a first transmitting element (53.1) which is designed to transmit a first transmission signal (TX₁) into the substrate (3, 6),
a receiving unit (56; 161) with a first, second and third receiving element (55.1-55.3; 162.1-162.3) which are designed to receive a received signal (TX₁/RX₁, TX₁/RX₂, TX₁/RX₃) which is dependent on the first transmission signal (TX₁) and the properties of the object (8, 11, 12.1-12.3) and of the substrate (3, 6),
a control and evaluation unit (45) which is designed to control the transmitting and receiving units (54, 56) and to evaluate the received signals (TX₁/RX₁, TX₁/RX₂, TX₁/RX₃), and
a display unit (26) which is designed to display the received signals (TX₁/RX₁, TX₁/RX₂, TX₁/RX₃) evaluated by the control and evaluation unit (45),
wherein the transmitting unit (54; 141; 161) has a second transmitting element (53.2) which is designed to transmit a second transmission signal (TX₂) into the substrate (3, 6), and a third transmitting element (53.3) which is designed to transmit a third transmission signal (TX₃) into the substrate (3, 6), wherein the first, second and third transmitting element (53.1-53.3) of the transmitting unit (54; 161) are able to be controlled independently of each other by the control and evaluation unit (45),
wherein the first transmitting element (53.1) of the transmitting unit (54) and the first receiving element (55.1) of the receiving unit (56) as a first sensor element (47.1; 162.1), the second transmitting element (53.2) of the transmitting unit (54) and the second receiving element (55.2) of the receiving unit (56) as a second sensor element (47.2; 162.2), and the third transmitting element (53.3) of the transmitting unit (54) and the third receiving element (55.3) of the receiving unit (56) as a third sensor element (47.3; 162.3) are integrated in a first sensor unit (44; 122; 162), and wherein the sensor elements (47.1, 47.2, 47.3; 162.1, 162.2, 162.3) are able to be switched by means of the control and evaluation unit (45) between a transmitting mode, in which a sensor element (47.1-47.3; 162.1-162.3) transmits a transmission signal (TX_{1,} TX₂, TX₃), and a receiving mode, in which a sensor element (47.1-47.3; 162.1-162.3) receives a received signal (TX₁/RX₁, TX₁/RX₂, TX₁/RX₃, TX₂/RX₁, TX₂/RX₂, TX₂/RX₃, TX₃/RX₁, TX₃/RX₂, TX₃/RX₃),
**characterized in that** the first, second and third sensor element (47.1, 47.2, 47.3; 162.1, 162.2, 162.3) are arranged in a nested arrangement in a first and second row, wherein the sensor element (47.3; 162.3) in the second row is arranged between the sensor elements (47.1, 47.2; 162.1, 162.2) in the first row.

2. Apparatus according to Claim 1, **characterized in that** the first, second and third transmitting element (53.1-53.3) of the transmitting unit (54) are designed to transmit transmission signals (TX_{1,P1}, TX_{2,P1}, TX_{3,P1}) with a first polarization direction (P1) and transmission signals (TX_{1,P2}, TX_{2,P2}, TX_{3,P2}) with a second polarization direction (P2), wherein the second polarization direction (P2) is different from the first polarization direction (P1).

3. Apparatus according to Claim 2, **characterized in that** the first, second and third receiving element (55.1-55.3) of the receiving unit (56) are designed to simultaneously receive a first received signal (TX_{1,P1}/RX_{1,P1}, TX_{1,P2}/RX_{1,P1}, TX_{1,P1}/RX_{2,P1}, TX_{1,P2}/RX_{2,P1}, TX_{1,P1}/RX_{3,P1}, TX_{1,P2}/RX_{3,P1}, TX_{2,P1}/RX_{1,P1}, TX_{2,P2}/RX_{1,P1}, TX_{2,P1}/RX_{2,P1}, TX_{2,P2}/RX_{2,P1}, TX_{2,P1}/RX_{3,P1}, TX_{2,P2}/RX_{3,P1}, TX_{3,P1}/RX_{1,P1}, TX_{3,P2}/RX_{1,P1}, TX_{3,P1}/RX_{2,P1}, TX_{3,P2}/RX_{2,P1}, TX_{3,P1}/RX_{3,P1}, TX_{3,P2}/RX_{3,P1}) in the first polarization direction (P1) and a second received signal (TX_{1,P1}/RX_{1,P2}, TX_{1,P2}/RX_{1,P2}, TX_{1,P1}/RX_{2,P2}, TX_{1,P2}/RX_{2,P2}, TX_{1,P1}/RX_{3,P2}, TX_{1,P2}/RX_{3,P2}, TX_{2,P1}/RX_{1,P2}, TX_{2,P2}/RX_{1,P2}, TX_{2,P1}/RX_{2,P2}, TX_{2,P2}/RX_{2,P2}, TX_{2,P1}/RX_{3,P2}, TX_{2,P2}/RX_{3,P2}, TX_{3,P1}/RX_{1,P2}, TX_{3,P2}/RX_{1,P2}, TX_{3,P1}/RX_{2,P2}, TX_{3,P2}/RX_{2,P2}, TX_{3,P1}/RX_{3,P2}, TX_{3,P2}/RX_{3,P2}) in the second polarization direction (P2).

4. Apparatus according to one of Claims 1 to 3, **characterized in that** the control and evaluation unit (45) has a memory (66) with a stack memory (67.1. 67.2, 67.3) and a main memory (68).

5. Apparatus according to one of Claims 1 to 4, **characterized in that** a second sensor unit (123) with sensor elements (126.1-126.4, 127.1-127.3) is provided, wherein the sensor elements (126.1-126.4, 127.1-127.3) of the second sensor unit (123) differ from the sensor elements (47.1, 47.2, 47.3) of the first sensor unit (122) in at least one sensor property.

6. Apparatus according to Claim 5, **characterized in that** it is possible to show on the display unit (26) the measurement results of the first sensor unit (122) in a first display mode, the measurement results of the second sensor unit (123) in a second display mode and the measurement results of the first and second sensor unit (122, 123) in a third display mode.

7. Apparatus according to either of Claims 5 and 6, **characterized in that** the second sensor unit (123) is designed as a current sensor unit for detecting a power line (11, 12.1-12.3).

8. Apparatus according to Claim 7, **characterized in that** the second sensor unit (123) has first and second magnetic field sensor elements (126.1-126.4, 127.1-127.3), wherein the first magnetic field sensor elements (126.1-126.4) sense a magnetic field or a magnetic field gradient in a first direction (130) and the second magnetic field sensor elements (127.1-127.3) sense a magnetic field or a magnetic field gradient in a second direction (132), which is different from the first direction (130).

9. Apparatus according to Claim 8, **characterized in that** the second sensor unit (123) has third magnetic field sensor elements, wherein the third magnetic field sensor elements sense a magnetic field or a magnetic field gradient in a third direction (131), which is different from the first and second direction (130, 132).

10. Apparatus according to Claim 7, **characterized in that** the second sensor unit (123) has magnetic field sensor elements which sense a magnetic field or a magnetic field gradient in a first direction (130) and in a second direction (132), which is different from the first direction (130).

11. Apparatus according to Claim 10, **characterized in that** the magnetic field sensor elements sense a magnetic field or a magnetic field gradient in a third direction (131), which is different from the first and second direction (130, 132).

12. Apparatus according to one of Claims 7 to 11, **characterized in that** the second sensor unit (123) has a modulation unit (124) which is able to be connected to the control and evaluation unit (45) via a communication connection (125) in a controllable manner and which modulates a current signal of the power line (11, 12.1-12.3) in response to a control command from the control and evaluation unit (45).

13. Apparatus according to Claim 12, **characterized in that** the control and evaluation unit (45) has an evaluation module for demodulating the received signals.

14. Apparatus according to one of Claims 1 to 13, **characterized in that** the control and evaluation unit (45) is designed to use the received signals (74.1-74.5) from the receiving elements (55.1-55.3) of the receiving unit (56) to calculate a plurality of depth cross-sections (89.1-89.5; 107.1-107.30, 108.1-108.30).

15. Apparatus according to Claim 14, **characterized in that** the control and evaluation unit (45) is designed to use the depth cross-sections (89.1-89.5; 107.1-107.30, 108.1-108.30) to calculate a plan view (90; 109) as a mean, median, maximum or weighted sum over a depth range between a first depth (z) and a second depth (z + Δz) and to show said plan view on the display unit (26).

16. Apparatus according to Claim 15, **characterized in that** the first depth (z) and the second depth (z + Δz) are designed to be variable.

17. Method for detecting an object (8, 11, 12.1-12.3) in a substrate (3, 6), by means of an apparatus according to one of the preceding claims, having the steps of:
transmitting a first transmission signal (TX₁) into the substrate (3, 6) by way of a first transmitting element (53.1; 142.1; 162.1) of a transmitting unit (54; 141; 161) of a first sensor unit,
receiving a received signal (TX₁/RX₁, TX₁/RX₂, TX₁/RX₃), which is dependent on the first transmission signal (TX₁) and the properties of the object (8, 11, 12.1-12.3) and of the substrate (3, 6), by way of each receiving element (55.1-55.3; 142.1-142.4; 162.1-162.5) of a receiving unit (56; 141; 161) of the first sensor unit,
transmitting a second transmission signal (TX₂) into the substrate (3, 6) by way of a second transmitting element (53.2; 142.2; 162.2) of the transmitting unit (54; 141; 161), receiving a received signal (TX₂/RX₁, TX₂/RX₂, TX₂/RX₃), which is dependent on the second transmission signal (TX₂) and the properties of the object (8, 11, 12.1-12.3) and of the substrate (3, 6), by way of each receiving element (55.1-55.3; 142.1-142.4; 162.1-162.5) of the receiving unit (56; 141; 161),
**characterized in that** the received signals are used by a control and evaluation unit (45) to calculate a plurality of depth cross-sections (89.1-89.5; 107.1-107.30, 108.1-108.30; 149.1-149.3, 150.1-150.3; 170.1-170.5, 171.1-171.5), wherein the depth cross-sections are a two-dimensional representation in a depth direction (Z) of the substrate (3, 6) and in a horizontal direction (X, Y) perpendicular to the depth direction (Z), and the depth cross-sections (89.1-89.5; 107.1-107.30, 108.1-108.30) are used to calculate a plan view (90; 109) and said plan view is displayed on a display unit (26), wherein the plan view (90; 109) is calculated as a mean, median, maximum or weighted sum over a depth range between a first depth (z) and a second depth (z + Δz).

18. Method according to Claim 17, **characterized in that** a third transmission signal (TX₃) is transmitted into the substrate (3, 6) by a third transmitting element (53.3; 142.3; 162.3) of the transmitting unit (54; 141; 161) and a received signal (TX₃/RX₁, TX₃/RX₂, TX₃/RX₃), which is dependent on the third transmission signal (TX₃) and the properties of the object (8, 11, 12.1-12.3) and of the substrate (3, 6), is received by each receiving element (55.1-55.3; 142.1-142.4; 162.1-162.5) of the receiving unit (56; 141; 161), wherein a transmission signal (TX_{1,} TX₂, TX₃) is transmitted by each transmitting element (53.1-53.3; 142.1-142.4; 162.1-162.5) of the transmitting unit (54; 141; 161) in succession and a received signal (TX₁/RX₁, TX₁/RX₂, TX₁/RX₃, TX₂/RX₁, TX₂/RX₂, TX₂/RX₃, TX₃/RX₁, TX₃/RX₂, TX₃/RX₃) is simultaneously received for each transmission signal (TX_{1,} TX₂, TX₃) by all the receiving elements (55.1-55.3; 142.1-142.4; 162.1-162.5) of the receiving unit (56; 141; 161).

19. Method according to Claim 18, **characterized in that** in a first step a transmission signal (TX_{1,P1}, TX_{2,P1}, TX_{3,P1}) with a first polarization direction (P1) and in a second step a transmission signal (TX_{1,P2}, TX_{2,P2}, TX_{3,P2}) with a second polarization direction (P2), which is different from the first polarization direction (P1), is transmitted by each of the transmitting elements (53.1-53.3) of the transmitting unit (54).

20. Method according to Claim 19, **characterized in that** a first received signal (TX_{1,P1}/RX_{1,P1}, TX_{1,P2}/RX_{1,P1}, TX_{1,P1}/RX_{2,P1}, TX_{1,P2}/RX_{2,P1}, TX_{1,P1}/RX_{3,P1}, TX_{1,P2}/RX_{3,P1}, TX_{2,P1}/RX_{1,P1}, TX_{2,P2}/RX_{1,P1}, TX_{2,P1}/RX_{2,P1}, TX_{2,P2}/RX_{2,P1}, TX_{2,P1}/RX_{3,P1}, TX_{2,P2}/RX_{3,P1}, TX_{3,P1}/RX_{1,P1}, TX_{3,P2}/RX_{1,P1}, TX_{3,P1}/RX_{2,P1}, TX_{3,P2}/RX_{2,P1}, TX_{3,P1}/RX_{3,P1}, TX_{3,P2}/RX_{3,P1}) in the first polarization direction (P1) and a second received signal (TX_{1,P1}/RX_{1,P2}, TX_{1,P2}/RX_{1,P2}, TX_{1,P1}/RX_{2,P2}, TX_{1,P2}/RX_{2,P2}, TX_{1,P1}/RX_{3,P2}, TX_{1,P2}/RX_{3,P2}, TX_{2,P1}/RX_{1,P2}, TX_{2,P2}/RX_{1,P2}, TX_{2,P1}/RX_{2,P2}, TX_{2,P2}/RX_{2,P2}, TX_{2,P1}/RX_{3,P2}, TX_{2,P2}/RX_{3,P2}, TX_{3,P1}/RX_{1,P2}, TX_{3,P2}/RX_{1,P2}, TX_{3,P1}/RX_{2,P2}, TX_{3,P2}/RX_{2,P2}, TX_{3,P1}/RX_{3,P2}, TX_{3,P2}/RX_{3,P2}) in the second polarization direction (P2) are simultaneously received by the receiving elements (55.1-55.3) of the receiving unit (56).

21. Method according to one of Claims 17 to 20, **characterized in that** the received signals are digitally averaged in a stack memory (67.1, 67.2, 67.3) before they are transmitted to a main memory (68) of a control and evaluation unit (45).

22. Method according to one of Claims 17 to 21, **characterized in that** a first magnetic field gradient (ΔBₓ) in a first direction (130) and a second magnetic field gradient (ΔB_{z}) in a second direction (132) are sensed by a second sensor unit (123).

23. Method according to Claim 22, **characterized in that** the first sensor unit (122) is moved over the substrate (6) in a direction of advance (28), the first magnetic field gradient (ΔBₓ) is sensed in a horizontal direction (130) perpendicular to the direction of advance (28) and the second magnetic field gradient (ΔB_{z}) is sensed in a depth direction (132) perpendicular to the direction of advance (28) and to the first horizontal direction (130).

24. Method according to Claim 23, **characterized in that** first and second magnetic field sensor elements (126.1-126.4, 127.1-127.3) are arranged alternately in the horizontal direction (130) and the first magnetic field gradient (ΔBₓ) and the second magnetic field gradient (ΔB_{z}) from adjacent first and second magnetic field sensor elements (126.1-126.4, 127.1-127.3) are used to calculate a mean absolute value ΔB_{xz} = sqrt[(ΔBₓ)² + (ΔB_{z})²] in each case.

25. Method according to Claim 24, **characterized in that** the mean absolute values (ΔB_{xz,1} - ΔB_{xz,6}) of the adjacent first and second magnetic field sensor elements (126.1-126.4, 127.1-127.3) are used by the control and evaluation unit (45) to calculate a horizontal representation and the horizontal representation is transferred from the control and evaluation unit (45) to a display unit (26) and is shown on the display unit (26).

## Revendications

1. Dispositif (1 ; 21 ; 121) pour détecter un objet (8, 11, 12.1-12.3) dans un sous-sol (3, 6), comprenant
une unité d'émission (54 ; 141 ; 161) comportant un premier élément d'émission (53.1), lequel est configuré pour émettre un premier signal d'émission (TX₁) dans le sous-sol (3, 6),
une unité de réception (56 ; 161) comportant un premier, un deuxième et un troisième élément de réception (55.1-55.3 ; 162.1-162.3), lesquels sont configurés pour recevoir un signal de réception (TX₁/RX₁, TX₁/RX₂, TX₁/RX₃) dépendant du premier signal d'émission (TX₁) et des propriétés de l'objet (8, 11, 12.1-12.3) et du sous-sol (3, 6), une unité de commande et d'interprétation (45), laquelle est configurée pour commander les unités d'émission et de réception (54, 56) et pour interpréter les signaux de réception (TX₁/RX₁, TX₁/RX₂, TX₁/RX₃), et
une unité d'affichage (26), laquelle est configurée pour afficher les signaux de réception (TX₁/RX₁, TX₁/RX₂, TX₁/RX₃) interprétés par l'unité de commande et d'interprétation (45), l'unité d'émission (54 ; 141 ; 161) possédant un deuxième élément d'émission (53.2), lequel est configuré pour émettre un deuxième signal d'émission (TX₂) dans le sous-sol (3, 6), et un troisième élément d'émission (53.3), lequel est configuré pour émettre un troisième signal d'émission (TX₃) dans le sous-sol (3, 6), le premier, le deuxième et le troisième élément d'émission (53.1-53.3) de l'unité d'émission (54 ; 161) pouvant être commandés indépendamment les uns des autres par l'unité de commande et d'interprétation (45),
le premier élément d'émission (53.1) de l'unité d'émission (54) et le premier élément de réception (55.1) de l'unité de réception (56) étant intégrés en tant que premier élément capteur (47.1 ; 162.1), le deuxième élément d'émission (53.2) de l'unité d'émission (54) et le deuxième élément de réception (55.2) de l'unité de réception (56) étant intégrés en tant que deuxième élément capteur (47.2 ; 162.2) et le troisième élément d'émission (53.3) de l'unité d'émission (54) et le troisième élément de réception (55.3) de l'unité de réception (56) étant intégrés en tant que troisième élément capteur (47.3 ; 162.3) dans une première unité de capteurs (44 ; 122 ; 162) et les éléments capteurs (47.1, 47.2, 47.3 ; 162.1, 162.2, 162.3) pouvant être commutés au moyen de l'unité de commande et d'interprétation (45) entre un mode d'émission, dans lequel un élément capteur (47.1-47.3 ; 162.1- 162.3) émet un signal d'émission (TX_{1,} TX₂, TX₃), et un mode de réception, dans lequel un élément capteur (47.1- 47.3 ; 162.1- 162.3) reçoit un signal de réception (TX₁/RX₁, TX₁/RX₂, TX₁/RX₃, TX₂/RX₁, TX₂/RX₂, TX₂/RX₃, TX₃/RX₁, TX₃/RX₂, TX₃/RX₃), **caractérisé en ce que** le premier, le deuxième et le troisième élément capteur (47.1, 47.2, 47.3 ; 162.1, 162.2, 162.3) sont disposés dans un arrangement imbriqué en une première et une deuxième rangée, l'élément capteur (47.3 ; 162.3) de la deuxième rangée étant disposé entre les éléments capteurs (47.1, 47.2 ; 162.1, 162.2) de la première rangée.

2. Dispositif selon la revendication 1, **caractérisé en ce que** le premier, le deuxième et le troisième élément d'émission (53.1-53.3) de l'unité d'émission (54) sont configurés pour émettre des signaux d'émission (TX_{1,P1}, TX₂, _{P1}, TX_{3, P1}) avec une première direction de polarisation (P1) et des signaux d'émission (TX_{1,P2}, TX₂, _{P2}, TX_{3, P2}) avec une deuxième direction de polarisation (P2), la deuxième direction de polarisation (P2) étant différente de la première direction de polarisation (P1).

3. Dispositif selon la revendication 2, **caractérisé en ce que** le premier, le deuxième et le troisième élément de réception (55.1-55.3) de l'unité de réception (56) sont configurés pour recevoir simultanément un premier signal de réception (TX_{1,P1}/RX_{1,P1}, TX_{1,P2}/RX_{1,P1}, TX_{1,P1}/RX_{2,P1}, TX_{1,P2}/RX_{2,P1}, TX_{1,P1}/RX_{3,P1}, TX_{1,P2}/RX_{3,P1}, TX_{2,P1}/RX_{1,P1}, TX_{2,P2}/RX_{1,P1}, TX_{2,P1}/RX_{2,P1}, TX_{2,P2}/RX_{2,P1}, TX_{2,P1}/RX_{3,P1}, TX_{2,P2}/RX_{3,P1}, TX_{3,P1}/RX_{1,P1}, TX_{3,P2}/RX_{1,P1}, TX_{3,P1}/RX_{2,P1}, TX_{3,P2}/RX_{2,P1}, TX_{3,P1}/RX_{3,P1}, TX_{3,P2}/RX_{3,P1}) dans la première direction de polarisation (P1) et un deuxième signal de réception (TX_{1,P1}/RX_{1,P2}, TX_{1,P2}/RX_{1,P2}, TX_{1,P1}/RX_{2,P2}, TX_{1,P2}/RX_{2,P2}, TX_{1,P1}/RX_{3,P2}, TX_{1,P2}/RX_{3,P2}, TX_{2,P1}/RX_{1,P2}, TX_{2,P2}/RX_{1,P2}, TX_{2,P1}/RX_{2,P2}, TX_{2,P2}/RX_{2,P2}, TX_{2,P1}/RX_{3,P2}, TX_{2,P2}/RX_{3,P2}, TX_{3,P1}/RX_{1,P2}, TX_{3,P2}/RX_{1,P2}, TX_{3,P1}/RX_{2,P2}, TX_{3,P2}/RX_{2,P2}, TX_{3,P1}/RX_{3,P2}, TX_{3,P2}/RX_{3,P2}) dans la deuxième direction de polarisation (P2).

4. Dispositif selon l'une des revendications 1 à 3, **caractérisé en ce que** l'unité de commande et d'interprétation (45) possède une mémoire (66) comprenant une pile (67.1, 67.2, 67.3) et une mémoire principale (68).

5. Dispositif selon l'une des revendications 1 à 4, **caractérisé en ce qu'**une deuxième unité de capteurs (123) comprenant des éléments capteurs (126.1-126.4, 127.1-127.3) est présente, les éléments capteurs (126.1-126.4, 127.1-127.3) de la deuxième unité de capteurs (123) se différentiant au niveau d'au moins une propriété de détecteur des éléments capteurs (47.1, 47.2, 47.3) de la première unité de capteurs (122).

6. Dispositif selon la revendication 5, **caractérisé en ce que** les résultats de mesure de la première unité de capteurs (122) peuvent être représentés sur l'unité d'affichage (26) dans un premier mode d'affichage, les résultats de mesure de la deuxième unité de capteurs (123) dans un deuxième mode d'affichage et les résultats de mesure de la première et de la deuxième unité de capteurs (122, 123) dans un troisième mode d'affichage.

7. Dispositif selon l'une des revendications 5 et 6, **caractérisé en ce que** la deuxième unité de capteurs (123) est réalisée sous la forme d'une unité de capteurs de courant destinée à détecter une ligne de courant (11, 12.1-12.3).

8. Dispositif selon la revendication 7, **caractérisé en ce que** la deuxième unité de capteurs (123) possède des premiers et des deuxièmes éléments capteurs de champ magnétique (126.1-126.4, 127.1-127.3), les premiers éléments capteurs de champ magnétique (126.1-126.4) captant un champ magnétique ou un gradient de champ magnétique dans une première direction (130) et les deuxièmes éléments capteurs de champ magnétique (127.1-127.3) captant un champ magnétique ou un gradient de champ magnétique dans une deuxième direction (132), différente de la première direction (130).

9. Dispositif selon la revendication 8, **caractérisé en ce que** la deuxième unité de capteurs (123) possède des troisièmes éléments capteurs de champ magnétique, les troisièmes éléments capteurs de champ magnétique captant un champ magnétique ou un gradient de champ magnétique dans une troisième direction (131), différente de la première et de la deuxième direction (130, 132).

10. Dispositif selon la revendication 7, **caractérisé en ce que** la deuxième unité de capteurs (123) possède des éléments capteurs de champ magnétique, lesquels captent un champ magnétique ou un gradient de champ magnétique dans une première direction (130) et dans une deuxième direction (132), différente de la première direction (130).

11. Dispositif selon la revendication 10, **caractérisé en ce que** les éléments capteurs de champ magnétique captent un champ magnétique ou un gradient de champ magnétique dans une troisième direction (131), différente de la première et de la deuxième direction (130, 132).

12. Dispositif selon l'une des revendications 7 à 11, **caractérisé en ce que** la deuxième unité de capteurs (123) possède une unité de modulation (124), laquelle peut être connectée de manière commandable à l'unité de commande et d'interprétation (45) par le biais d'une liaison de communication (125) et module un signal de courant de la ligne de courant (11, 12.1-12.3) sur une instruction de commande de l'unité de commande et d'interprétation (45).

13. Dispositif selon la revendication 12, **caractérisé en ce que** l'unité de commande et d'interprétation (45) possède un module d'interprétation destiné à démoduler les signaux de réception.

14. Dispositif selon l'une des revendications 1 à 13, **caractérisé en ce que** l'unité de commande et d'interprétation (45) est configurée pour calculer plusieurs vues en coupe de profondeur (89.1-89.5 ; 107.1-107.30, 108.1-108.30) à partir des signaux de réception (74.1-74.5) des éléments de réception (55.1-55.3) de l'unité de réception (56).

15. Dispositif selon la revendication 14, **caractérisé en ce que** l'unité de commande et d'interprétation (45) est configurée pour calculer, à partir des vues en coupe de profondeur (89.1-89.5 ; 107.1-107.30, 108.1-108.30), une vue de dessus (90 ; 109) en tant que valeur moyenne, médiane, valeur maximale ou somme pondérée sur une plage de profondeur entre une première profondeur (z) et une deuxième profondeur (z + □z) et la représenter sur l'unité d'affichage (26).

16. Dispositif selon la revendication 15, **caractérisé en ce que** la première profondeur (z) et la deuxième profondeur (z + □z) sont représentées de manière positionnable.

17. Procédé pour détecter un objet (8, 11, 12.1-12.3) dans un sous-sol (3, 6), au moyen d'un dispositif selon l'une des revendications précédentes,
comprenant les étapes suivantes :
émission dans le sous-sol (3, 6) d'un premier signal d'émission (TX₁) par un premier élément d'émission (53.1 ; 142.1 ; 162.1) d'une unité d'émission (54 ; 141 ; 161) d'une première unité de capteurs,
réception, par chaque élément de réception (55.1-55.3 ; 142.1-142.4 ; 162.1-162.5) d'une unité de réception (56 ; 141 ; 161) de la première unité de capteurs, d'un signal de réception (TX₁/RX₁, TX₁/RX₂, TX₁/RX₃) dépendant du premier signal d'émission (TX₁) et des propriétés de l'objet (8, 11, 12.1-12.3) et du sous-sol (3, 6),
émission d'un deuxième signal d'émission (TX₂) dans le sous-sol (3, 6) par un deuxième élément d'émission (53.2 ; 142.2 ; 162.2) de l'unité d'émission (54 ; 141 ; 161),
réception, par chaque élément de réception (55.1-55.3 ; 142.1-142.4 ; 162.1-162.5) de l'unité de réception (56 ; 141; 161), d'un signal de réception (TX₂/RX₁, TX₂/RX₂, TX₂/RX₃) dépendant du deuxième signal d'émission (TX₂) et des propriétés de l'objet (8, 11, 12.1-12.3) et du sous-sol (3, 6),
**caractérisé en ce que** plusieurs vues en coupe de profondeur (89.1-89.5 ; 107.1-107.30, 108.1-108.30 ; 149.1-149.3, 150.1-150.3 ; 170.1-170.5, 171.1-171.5) sont calculées par une unité de commande et d'interprétation (45) à partir des signaux de réception, les vues en coupe de profondeur étant une représentation bidimensionnelle dans une direction de profondeur (Z) du sous-sol (3, 6) et une direction horizontale (X, Y) perpendiculaire à la direction de profondeur (Z), et une vue de dessus (90 ; 109) étant calculée à partir des vues en coupe de profondeur (89.1-89.5 ; 107.1-107.30, 108.1-108.30) et affichée sur une unité d'affichage (26), la vue de dessus (90 ; 109) étant calculée en tant que valeur moyenne, médiane, valeur maximale ou somme pondérée sur une plage de profondeur entre une première profondeur (z) et une deuxième profondeur (z + □z).

18. Procédé selon la revendication 17, **caractérisé en ce qu'**un troisième signal d'émission (TX₃) est émis dans le sous-sol (3, 6) par un troisième élément d'émission (53.3 ; 142.3 ; 162.3) de l'unité d'émission (54 ; 141 ; 161) et un signal de réception (TX₃/RX₁, TX₃/RX₂, TX₃/RX₃) dépendant du troisième signal d'émission (TX₃) et des propriétés de l'objet (8, 11, 12.1-12.3) et du sous-sol (3, 6) est reçu par chaque élément de réception (55.1-55.3 ; 142.1-142.4 ; 162.1-162.5) de l'unité de réception (56 ; 141 ; 161), un signal d'émission (TX_{1,} TX₂, TX₃) étant envoyé par chaque élément d'émission (53.1-53.3 ; 142.1-142.4 ; 162.1-162.5) de l'unité d'émission (54 ; 141 ; 161) l'un après l'autre et un signal de réception (TX₁/RX₁, TX₁/RX₂, TX₁/RX₃, TX₂/RX₁, TX₂/RX₂, TX₂/RX₃, TX₃/RX₁, TX₃/RX₂, TX₃/RX₃) étant reçu simultanément par tous les éléments de réception (55.1-55.3 ; 142.1-142.4 ; 162.1-162.5) de l'unité de réception (56 ; 141 ; 161) pour chaque signal d'émission (TX_{1,} TX₂, TX₃).

19. Procédé selon la revendication 18, **caractérisé en ce qu'**un signal d'émission (TX_{1,P1}, TX_{2, P1}, TX_{3, P1}) avec une première direction de polarisation (P1) est émis par les éléments d'émission (53.1-53.3) de l'unité d'émission (54) respectivement dans une première étape et un signal d'émission (TX_{1,P2}, TX₂, _{P2}, TX_{3, P2}) avec une deuxième direction de polarisation (P2), laquelle est différente de la première direction de polarisation (P1), est émis dans une deuxième étape.

20. Procédé selon la revendication 19, **caractérisé en ce qu'**un premier signal de réception (TX_{1,P1}/RX_{1,P1}, TX_{1,P2}/RX_{1,P1}, TX_{1,P1}/RX_{2,P1}, TX_{1,P2}/RX_{2,P1}, TX_{1,P1}/RX_{3,P1}, TX_{1,P2}/RX_{3,P1}, TX_{2,P1}/RX_{1,P1}, TX_{2,P2}/RX_{1,P1}, TX_{2,P1}/RX_{2,P1}, TX_{2,P2}/RX_{2,P1}, TX_{2,P1}/RX_{3,P1}, TX_{2,P2}/RX_{3,P1}, TX_{3,P1}/RX_{1,P1}, TX_{3,P2}/RX_{1,P1}, TX_{3,P1}/RX_{2,P1}, TX_{3,P2}/RX_{2,P1}, TX_{3,P1}/RX_{3,P1}, TX_{3,P2}/RX_{3,P1}) dans la première direction de polarisation (P1) et un deuxième signal de réception (TX_{1,P1}/RX_{1,P2}, TX_{1,P2}/RX_{1,P2}, TX_{1,P1}/RX_{2,P2}, TX_{1,P2}/RX_{2,P2}, TX_{1,P1}/RX_{3,P2}, TX_{1,P2}/RX_{3,P2}, TX_{2,P1}/RX_{1,P2}, TX_{2,P2}/RX_{1,P2}, TX_{2,P1}/RX_{2,P2}, TX_{2,P2}/RX_{2,P2}, TX_{2,P1}/RX_{3,P2}, TX_{2,P2}/RX_{3,P2}, TX_{3,P1}/RX_{1,P2}, TX_{3,P2}/RX_{1,P2}, TX_{3,P1}/RX_{2,P2}, TX_{3,P2}/RX_{2,P2}, TX_{3,P1}/RX_{3,P2}, TX_{3,P2}/RX_{3,P2}) dans la deuxième direction de polarisation (P2) sont reçus simultanément par les éléments de réception (55.1-55.3) de l'unité de réception (56).

21. Procédé selon l'une des revendications 17 à 20, **caractérisé en ce que** la valeur moyenne des signaux de réception est calculée numériquement dans une pile (67.1, 67.2, 67.3) avant qu'ils ne soient communiqués à une mémoire principale (68) d'une unité de commande et d'interprétation (45).

22. Procédé selon l'une des revendications 17 à 21, **caractérisé en ce qu'**un premier gradient de champ magnétique (□Bₓ) est capté dans une première direction (130) et un deuxième gradient de champ magnétique (□B_{z}) est capté dans une deuxième direction (132) par une deuxième unité de capteurs (123).

23. Procédé selon la revendication 22, **caractérisé en ce que** la première unité de capteurs (122) est déplacée dans une direction d'avance (28) au-dessus du sous-sol (6), le premier gradient de champ magnétique (□Bₓ) est capté dans une direction (130) horizontale perpendiculaire à la direction d'avance (28) et le deuxième gradient de champ magnétique (□B_{z}) est capté dans une direction de profondeur (132) perpendiculaire à la direction d'avance (28) et à la première direction (130) horizontale.

24. Procédé selon la revendication 23, **caractérisé en ce que** des premiers et des deuxièmes éléments capteurs de champ magnétique (126.1-126.4, 127.1-127.3) sont disposés en alternance dans la direction (130) horizontale et un montant moyen □B_{xz} = sqrt[(□Bₓ)² + (□B_{z})²] est respectivement calculé à partir du premier gradient de champ magnétique (□Bₓ) et du deuxième gradient de champ magnétique (□B_{z}) de premiers et deuxièmes éléments capteurs de champ magnétique (126.1-126.4, 127.1-127.3) voisins.

25. Procédé selon la revendication 24, **caractérisé en ce qu'**une représentation horizontale est calculée par l'unité de commande et d'interprétation (45) à partir des montants moyens (□B_{xz,1} - □B_{xz,6},) des premiers et deuxièmes éléments capteurs de champ magnétique (126.1-126.4, 127.1-127.3) voisins et la représentation horizontale est transmise par l'unité de commande et d'interprétation (45) à une unité d'affichage (26) et représentée sur l'unité d'affichage (26).
